(19) Europäisches Patentamt
European Patent Office
Office européen des brevets

(11) EP 4 322 449 B1

(12) EUROPEAN PATENT SPECIFICATION

(45) Date of publication and mention of the grant of the patent:
**09.09.2026 Bulletin 2026/37**

(21) Application number: **22846294.1**

(22) Date of filing: **22.07.2022**

(51) International Patent Classification (IPC):
***H04L 5/00*** *(2006.01)* ***H04L 5/14*** *(2006.01)*
***H04W 74/00*** *(2009.01)* ***H04W 48/10*** *(2009.01)*
***H04W 72/12*** *(2023.01)* ***H04W 72/04*** *(2023.01)*
***H04W 74/08*** *(2024.01)* *H04W 74/0833 (2024.01)*

(52) Cooperative Patent Classification (CPC):
**H04W 74/0833; H04L 5/0048; H04W 74/006;**
H04L 5/1469; H04W 48/10

(86) International application number:
**PCT/KR2022/010781**

(87) International publication number:
**WO 2023/003424 (26.01.2023 Gazette 2023/04)**

(54) **COMMUNICATION METHOD AND APPARATUS FOR XDD USER EQUIPMENT IN WIRELESS COMMUNICATION SYSTEM**

KOMMUNIKATIONSVERFAHREN UND VORRICHTUNG FÜR XDD-BENUTZERGERÄT IN EINEM DRAHTLOSKOMMUNIKATIONSSYSTEM

PROCÉDÉ ET APPAREIL DE COMMUNICATION POUR ÉQUIPEMENT UTILISATEUR XDD DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2021 KR 20210096257**

(43) Date of publication of application:
**14.02.2024 Bulletin 2024/07**

(73) Proprietor: **Samsung Electronics Co., Ltd.**
**Suwon-si, Gyeonggi-do 16677 (KR)**

(72) Inventors:
- **CHOI, Seunghoon**
**Suwon-si, Gyeonggi-do 16677 (KR)**
- **KIM, Younsun**
**Suwon-si, Gyeonggi-do 16677 (KR)**
- **PARK, Sungjin**
**Suwon-si, Gyeonggi-do 16677 (KR)**
- **SHIN, Cheolkyu**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
**WO-A1-2020/156125 WO-A1-2020/156125**
**WO-A1-2021/066441 KR-A- 20210 040 703**
**US-A1- 2021 160 934 US-A1- 2021 360 707**
**US-A1- 2022 330 182**

- **SAMSUNG: "XDD (cross-division duplex) for enhanced duplexing operation in 5G Advanced", vol. TSG RAN, no. Electronic Meeting; 20210628 - 20210702, 7 June 2021 (2021-06-07), XP052025739, Retrieved from the Internet <URL:https://ftp.3gpp.org/tsg_ran/TSG_RAN/TSGR_AHs/2021_06_RAN_Rel18_WS/Docs/RWS-210180.zip RWS-210180 XDD for Rel-18 workshop_final.pdf> [retrieved on 20210607]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **SAMSUNG RESEARCH: "XDD (Cross Division Duplex): Extending Coverage of 5G TDD Carriers", SAMSUNG RESEARCH TEAM TECHNICAL WHITE PAPER, 31 May 2021 (2021-05-31), JP, pages 1 - 14, XP093030722, Retrieved from the Internet <URL:https://cdn.codeground.org/nsr/downloads/researchareas/white_paper_XDD.pdf> [retrieved on 20230310]**
- **JI HYOUNGJU ET AL: "Extending 5G TDD Coverage With XDD: Cross Division Duplex", IEEE ACCESS, IEEE, USA, vol. 9, 26 March 2021 (2021-03-26), pages 51380 - 51392, XP011847925, DOI: 10.1109/ACCESS.2021.3068977**
- **SAMSUNG: "XDD (cross-division duplex) for enhanced duplexing operation in 5G Advanced", 3GPP DRAFT; RWS-210180, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20210628 - 20210702, 7 June 2021 (2021-06-07), Mobile Competence Centre ; 650, route des Lucioles ; F-06921 Sophia-Antipolis Cedex ; France , XP052025739**
- **JI HYOUNGJU; KIM YOUNSUN; MUHAMMAD KHURRAM; TARVER CHANCE; TONNEMACHER MATTHEW; KIM TAEHYOUNG; OH JINYOUNG; YU BIN; XU GARY; LEE J: "Extending 5G TDD Coverage With XDD: Cross Division Duplex", IEEE ACCESS, IEEE, USA, vol. 9, 26 March 2021 (2021-03-26), USA , pages 51380 - 51392, XP011847925, DOI: 10.1109/ACCESS.2021.3068977**
- **CMCC: "New study on full duplex for NR", 3GPP DRAFT; RWS-210352, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Electronic Meeting; 20210628 - 20210702, 7 June 2021 (2021-06-07), Mobile Competence Centre ; 650, route des Lucioles ; F-06921 Sophia-Antipolis Cedex ; France , XP052025906**

## Description

### [Technical Field]

The disclosure relates to a communication method and apparatus for a cross-division duplex (XDD) terminal in a wireless communication system and, specifically, to a communication method and apparatus for performing PRACH transmission by an XDD terminal.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation

distributed computing technology for implementing services at levels of complexity exceeding the limit of UE operation capability by utilizing ultra-high-performance communication and computing resources.

WO 2021/066441 Al discloses a method and apparatus for transmitting and receiving a signal in a wireless communication system. An operating method of a terminal in a wireless communication system includes receiving, from a base station, information related to a position of a symbol in which a synchronization signal block is transmitted in a time domain, determining whether a position of a symbol con figured to transmit an uplink signal overlaps the position of the symbol in which the synchronization signal block is transmitted in the time domain, in case that the position of the symbol configured to transmit the uplink signal overlaps the position of the symbol in which the synchronization signal block is transmitted in the time domain, determining whether a time or frequency-division duplexing (XDD) related indicator is configured or received, and transmitting the uplink signal to the base station, based on a result of the determining whether the XDD-related indicator is configured or received.

**[Disclosure of Invention]**

**[Technical Problem]**

In the 3rd generation partnership project (3GPP), discussions have begun regarding cross-division duplex (XDD) as a new duplex technology for expanding the uplink coverage of a terminal and reducing feedback delay by placing uplink resources in downlink resources of a TDD band. Accordingly, the need for an efficient communication method for an XDD terminal is arising.

**[Solution to Problem]**

The present invention is defined by the appended set of claims. Preferred embodiments are defined by the dependent claims. According to an embodiment of the disclosure, a method performed by a terminal of a wireless communication system is provided. The method includes receiving, from a base station, first configuration information related to time division duplex (TDD) and second configuration information related to duplex in which a partial frequency resource corresponding to a downlink time resource is used for uplink, identifying at least one valid physical random access channel (PRACH) occasion, based on the first configuration information and the second configuration information, and transmitting a random access preamble to the base station, based on the at least one valid PRACH occasion.

According to another embodiment of the disclosure, a method performed by a base station of a wireless communication system is provided. The method includes transmitting, to a terminal, first configuration information related to TDD and second configuration information related to duplex in which a partial frequency resource corresponding to a downlink time resource is used for uplink, identifying at least one valid PRACH occasion according to the first configuration information and the second configuration information, and receiving a random access preamble from the terminal, based on the at least one valid PRACH occasion.

According to another embodiment of the disclosure, a terminal of a wireless communication system is provided. The terminal includes a transceiver and a controller. The controller is configured to control the transceiver to receive, from a base station, first configuration information related to TDD and second configuration information related to duplex in which a partial frequency resource corresponding to a downlink time resource is used for uplink, identify at least one valid PRACH occasion, based on the first configuration information and the second configuration information, and control the transceiver to transmit a random access preamble to the base station, based on the at least one valid PRACH occasion.

According to another embodiment of the disclosure, a base station of a wireless communication system is provided. The base station includes a transceiver and a controller. The controller is configured to control the transceiver to transmit, to a terminal, first configuration information related to TDD and second configuration information related to duplex in which a partial frequency resource corresponding to a downlink time resource is used for uplink, identify at least one valid PRACH occasion according to the first configuration information and the second configuration information, and control the transceiver to receive a random access preamble from the terminal, based on the at least one valid PRACH occasion.

**[Advantageous Effects of Invention]**

According to an embodiment of the disclosure, an XDD terminal may efficiently perform PRACH transmission.

**[Brief Description of Drawings]**

FIG. 1 is a diagram illustrating a basic structure of a time-frequency domain that is a wireless resource region in a

wireless communication system to which the disclosure is applied;

FIG. 2 is a diagram illustrating a slot structure considered in a wireless communication system to which the disclosure is applied;

FIG. 3 is a diagram illustrating a synchronization signal block considered in a wireless communication system to which the disclosure is applied;

FIG. 4 is a diagram illustrating cases of transmission of a synchronization signal block in a 6 GHz or below frequency band considered in a wireless communication system to which the disclosure is applied;

FIG. 5 is a diagram illustrating cases of transmission of a synchronization signal block in a 6 GHz or above frequency band considered in a wireless communication system to which the disclosure is applied;

FIG. 6 is a diagram illustrating cases of transmission of a synchronization signal block according to a subcarrier spacing within a time of 5 ms in a wireless communication system to which the disclosure is applied;

FIG. 7 is a diagram illustrating a random access procedure in a wireless communication system to which the disclosure is applied;

FIG. 8 is a diagram illustrating an example in which XDD is operated in a TDD band of a wireless communication system to which the disclosure is applied;

FIG. 9 is a diagram illustrating an example in which XDD is operated together with TDD in a frequency band to which the disclosure is applied;

FIG. 10 is a diagram illustrating an XDD terminal operation when a valid PRACH occasion and a downlink reception occur at the same time in a wireless communication system to which the disclosure is applied;

FIG. 11 is a diagram illustrating a relation between a synchronization signal block and a valid random access occasion in a wireless communication system to which the disclosure is applied;

FIG. 12 is a flowchart illustrating an operation of an XDD terminal in a wireless communication system according to an embodiment of the disclosure;

FIG. 13 is a flowchart illustrating an operation of a base station in a wireless communication system according to an embodiment of the disclosure;

FIG. 14 is a diagram illustrating a structure of a terminal according to an embodiment of the disclosure; and

FIG. 15 is a diagram illustrating a structure of a base station according to an embodiment of the disclosure.

**[Mode for the Invention]**

Hereinafter, embodiments of the disclosure will be described in detail with reference to the accompanying drawings.

In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, or other similar services. In addition,

based on determinations by those skilled in the art, the embodiments of the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

Hereinafter, embodiments of the disclosure will be described in detail in conjunction with the accompanying drawings. In methods and devices proposed in the embodiments of the disclosure, while the embodiments will be described in connection with, for example, IoT services (IWSN, surveillance cameras, wearables, etc.), the embodiments of the disclosure are not limited to the individual embodiments, and any combination of all or some of one or more embodiments proposed herein may also be used for downlink reception and uplink transmission methods that are other additional services. Therefore, modifications may be made to the embodiments of the disclosure without significantly departing from the scope of the disclosure under the determination by a person having skilled technical knowledge (i.e., those skilled in the art).

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) (or a mobile station (MS)) transmits data or control signals to a base station (BS) (eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The

services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and must also assign a large number of resources in a frequency band in order to secure reliability of a communication link.

The three services in the 5G communication system (may be interchangeably used with "5G system"), that is, eMBB, URLLC, and mMTC, may be multiplexed and transmitted in a single system. In this case, different transmission/reception techniques and transmission/reception parameters may be used between services in order to satisfy different requirements of the respective services.

Hereinafter, a frame structure of a 5G system will be described in detail with reference to the drawings. In the following description, a wireless communication system to which the disclosure is applied will be described as a configuration of a 5G system as an example for convenience of explanation, but embodiments of the disclosure may also be applied to a 5G or beyond system or a different communication system to which the disclosure is applicable, in the same or similar way.

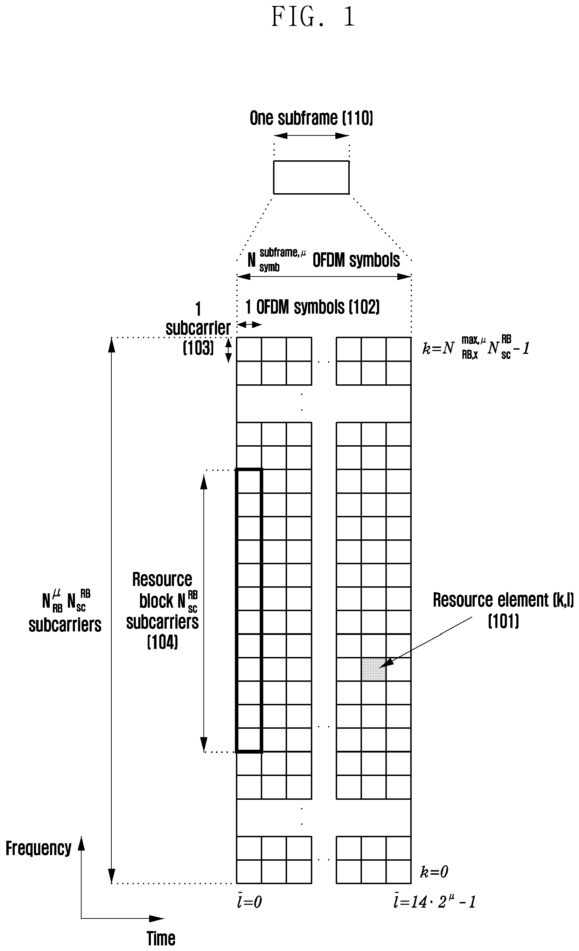

FIG. 1 is a diagram illustrating a basic structure of a time-frequency domain that is a wireless resource region in a wireless communication system to which the disclosure is applied.

In FIG. 1, the transverse axis indicates a time domain, and the longitudinal axis indicates a frequency domain. A basic unit of resources in the time-frequency domain is a resource element (RE) 101, and may be defined by one orthogonal frequency division multiplexing (OFDM) symbol 102 (or a discrete Fourier transform spread OFDM (DFT-s-OFDM) symbol) in the time axis and one subcarrier 103 in the frequency axis. In the frequency domain, $N_{sc}^{RB}$ number (e.g., 12) of consecutive REs, which indicates the number of subcarriers per resource block (RB), may configure one resource block (RB) 104. In addition, in the time domain, $N_{symb}^{subframe}$ number of consecutive OFDM symbols, which indicates the number of symbols per subframe, may configure one subframe 110.

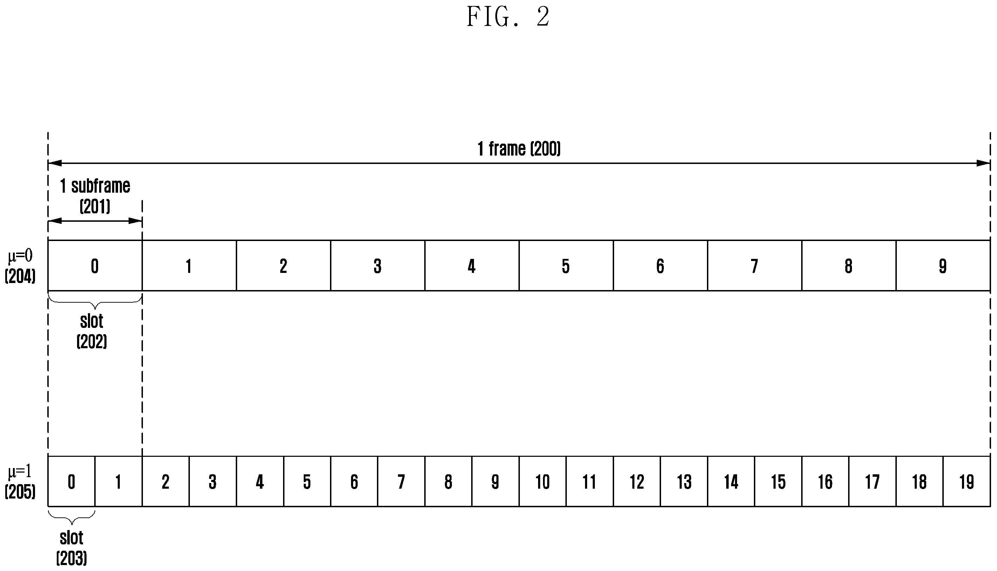

FIG. 2 is a diagram illustrating a slot structure considered in a wireless communication system to which the disclosure is applied.

In FIG. 2, an example of a structure of a frame 200, a subframe 201, and a slot 202 or 203 is illustrated. The one frame 200 may be defined as 10 ms. The one subframe 201 may be defined as 1 ms, and thus the one frame 200 may be configured by a total of 10 subframes 201. Furthermore, the one slot 202 or 203 may be defined as 14 OFDM symbols (i.e., the number ($N_{symb}^{slot}$) of symbols per one slot = 14). The one subframe 201 may be configured by one or multiple slots 202 or 203, and the number of slots 202 or 203 per one subframe 201 may vary according to a configuration value $\mu$ 204 or 205 of subcarrier spacing (SCS).

In the example of FIG. 2, slot structures of a case of $\mu$=0 (204) and a case of $\mu$=1 (205) as a subcarrier spacing configuration value are illustrated. In the case of $\mu$=0 (204), the one subframe 201 may be configured by the one slot 202, and in the case of $\mu$=1 (205), the one subframe 201 may be configured by two slots 203. That is, the number ($N_{slot}^{subframe,\mu}$)

of slots per one subframe may vary according to a configuration value μ of a subcarrier spacing, and the number ( $N_{slot}^{frame,\mu}$ ) of slots per one frame may vary accordingly. $N_{slot}^{subframe,\mu}$ and $N_{slot}^{frame,\mu}$ according to each subcarrier spacing configuration μ may be defined as shown below in Table 1.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In a 5G wireless communication system, a synchronization signal block (this may be used together with an SSB, an SS block, an SS/PBCH block, etc.) may be transmitted for initial access of a terminal, and a synchronization signal block may include a primary synchronization signal (PSS), a secondary synchronization signal (SSS), and a physical broadcast channel (PBCH). In an initial access stage at which the terminal accesses the system, the terminal may first perform cell search to obtain downlink time/frequency domain synchronization and a cell ID from a synchronization signal. The synchronization signal may include a PSS and an SSS. The terminal receives a PBCH transmitting a master information block (MIB) from a base station, and obtains a basic parameter value and transmission/reception-related system information, such as a system bandwidth or relevant control information. Based on this information, the terminal may decode a physical downlink control channel (PDCCH) and a physical downlink shared channel (PDSCH) to obtain a system information block (SIB). Thereafter, the terminal may exchange identification-related information of the terminal with the base station through a random access stage, and initially access a network through registration and authentication stages.

Hereinafter, an initial cell access operation procedure of a 5G communication system will be described in more detail with reference to the drawings.

A synchronization signal is a signal serving as a criterion of cell search, and a subcarrier spacing suitable for a channel environment, such as a phase noise, for each frequency band is applied to a synchronization signal to be transmitted. A 5G base station may transmit multiple synchronization signal blocks according to the number of analog beams to be managed. For example, a PSS and an SSS may be mapped and transmitted over 12 RBs, and a PBCH may be mapped and transmitted over 24 RBs. A structure in which a synchronization signal and a PBCH are transmitted in a 5G communication system will be described below.

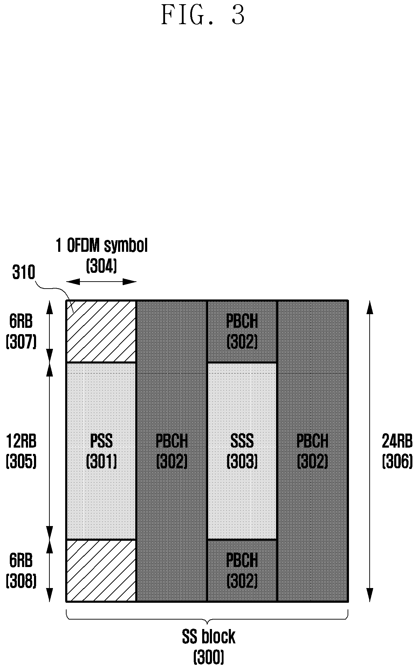

FIG. 3 is a diagram illustrating a synchronization signal block considered in a wireless communication system to which the disclosure is applied.

According to FIG. 3, a synchronization signal block (SS block) 300 includes a PSS 301, an SSS 303, and a PBCH (broadcast channel) 302.

As illustrated in FIG. 3, the synchronization signal block 300 is mapped to four OFDM symbols 304 on the time axis. The PSS 301 and the SSS 303 may be transmitted on 12 RBs 305 on the frequency axis and on the first and third OFDM symbols on the time axis, respectively. In a 5G system, for example, a total of 1008 different cell IDs may be defined, the PSS 301 may have three different values according to a physical layer ID (PCI) of a cell, and the SSS 303 may have 336 different values. A terminal may obtain one of the 1008 (=336X3) cell IDs through detection of the PSS 301 and the SSS 303 as a combination thereof. This may be expressed by Equation 1 below.

[Equation 1]

$$N_{ID}^{cell}=3N_{ID}^{(1)}+N_{ID}^{(2)}$$

Here, $N^{(1)}_{ID}$ may be estimated from the SSS 303, and have a value of 0 to 335. $N^{(2)}_{ID}$ may be estimated from the PSS 301, and have a value of 0 to 2. The terminal may estimate a value of $N^{cell}_{ID}$, which is a cell ID, by using a combination of $N^{(1)}_{ID}$ and $N^{(2)}_{ID}$.

The PBCH 302 may be transmitted on a resource including both 6 RBs 307 and 6 RBs 308 and remaining after

excluding middle 12 RBs, on which the SSS 303 is transmitted, from the second to fourth OFDM symbols of the SS block on the time axis and 24 RBs 306 on the frequency axis. Various system information called an MIB may be transmitted in the PBCH 302. For example, an MIB may include information as shown in Table 2 below, and a PBCH payload and a PBCH demodulation reference signal (DMRS) include additional information below.

[Table 2]

```
MIB ::=                         SEQUENCE {
systemFrameNumber                   BIT STRING (SIZE (6)),
subCarrierSpacingCommon             ENUMERATED {scs15or60, scs30or120},
ssb-SubcarrierOffset            INTEGER (0..15),
dmrs-TypeA-Position                 ENUMERATED {pos2, pos3},
pdcch-ConfigSIB1                  PDCCH-ConfigSIB1,
cellBarred                      ENUMERATED {barred, notBarred},
intraFreqReselection                ENUMERATED {allowed, notAllowed},
spare                           BIT STRING (SIZE (1))
}
```

- Synchronization signal block information: A frequency domain offset of a synchronization signal block may be indicated through four bits (ssb-SubcarrierOffset) in an MIB. An index of a synchronization signal block including the PBCH may be indirectly obtained through decoding a PBCH DMRS and the PBCH. More specifically, in a 6 GHz or below frequency band, three bits obtained through decoding of a PBCH DMRS may indicate a synchronization signal block index, and in a 6 GHz or above frequency band, a total of six bits including three bits obtained through decoding of a PBCH DMRS and three bits included in a PBCH payload and obtained through PBCH decoding may indicate an index of a synchronization signal block including a PBCH.
- Physical downlink control channel (PDCCH) information: A subcarrier spacing of a common downlink control channel may be indicated through one bit (subCarrierSpacingCommon) in an MIB, and time-frequency resource configuration information of a control resource set (CORESET) and a search space (SS) may be indicated through eight bits (pdcch-ConfigSIB 1).
- System frame number (SFN): Six bits (systemFrameNumber) in an MIB may be used to indicate a part of an SFN. Four least significant bits (LSBs) of an SFN are included in a PBCH payload, and thus a terminal may indirectly obtain same through PBCH decoding.
- Timing-in-radio frame information: This information indicates one bit (a half frame) obtained through PBCH decoding and included in a PBCH payload and a synchronization signal block index described above, and may enable a terminal to indirectly identify whether a synchronization signal block has been transmitted in the first or second half frame in a radio frame.

The transmission bandwidth (12 RBs 305) of the PSS 301 and the SSS 303 and the transmission bandwidth (24 RBs 306) of the PBCH 302 are different from each other. Therefore, both 6 RBs 307 and 6 RBs 308 remain after excluding middle 12 RBs, on which the PSS 301 is transmitted, from the first OFDM symbol on which the PSS 301 is transmitted within the transmission bandwidth of the PBCH 302, and these regions may be used to transmit another signal, or may remain empty.

A synchronization signal block may be transmitted using the same analog beam. That is, the PSS 301, the SSS 303, and the PBCH 302 may all be transmitted using the same analog beam. Analog beams have a characteristic of being incapable of being applied differently along the frequency axis. Therefore, the same analog beam may be applied in all frequency axis RBs in a particular OFDM symbol to which a particular analog beam is applied. For example, four OFDM symbols in which the PSS 301, the SSS 303, and the PBCH 302 are transmitted may all be transmitted using the same analog beam.

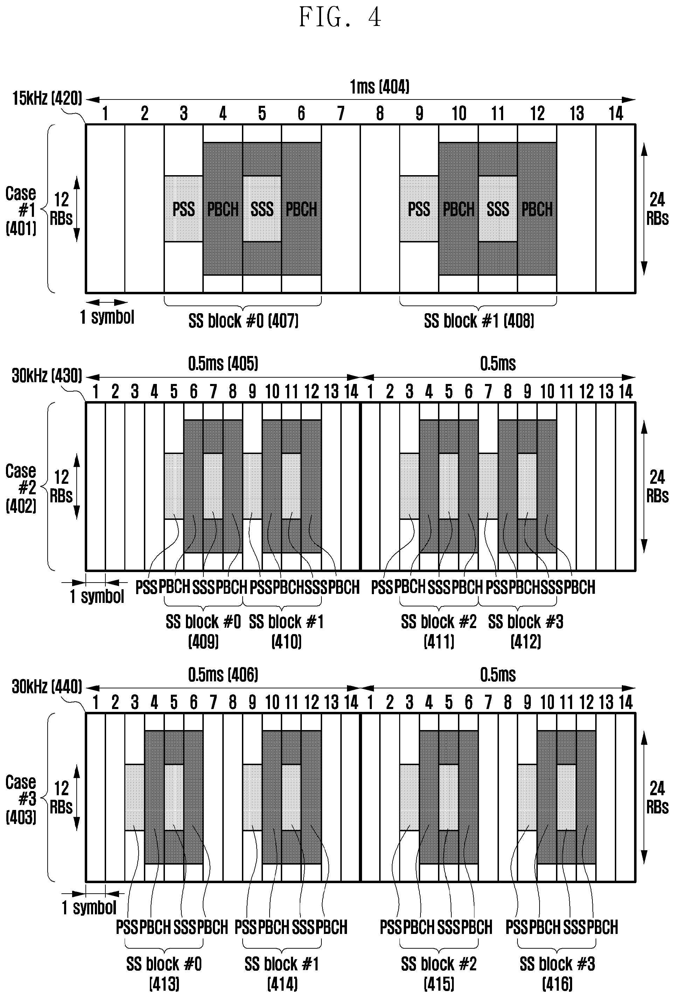

FIG. 4 is a diagram illustrating various cases of transmission of a synchronization signal block in a 6 GHz or below frequency band considered in a communication system to which the disclosure is applied.

In a 5G communication system, in a 6 GHz or below frequency band, a subcarrier spacing (SCS) of 15 KHz (420)

and a subcarrier spacing of 30 kHz (430 and 440) may be used in transmission of a synchronization signal block. In relation to the subcarrier spacing of 15 kHz, one transmission case (case #1 401) relating to a synchronization signal block may exist, and in relation to the subcarrier spacing of 30 kHz, two transmission cases (case #2 402 and case #3 403) relating to a synchronization signal block may exist.

In FIG. 4, in case #1 401 of the subcarrier spacing of 15 kHz (420), a maximum of two synchronization signal blocks may be transmitted within a time of 1 ms (404) (or this corresponds to one slot length in a case where one slot is configured by 14 OFDM symbols). In one example of FIG. 4, synchronization signal block #0 407 and synchronization signal block #1 408 are illustrated. For example, synchronization signal block #0 407 may be mapped to four consecutive symbols from the third OFDM symbol, and synchronization signal block #1 408 may be mapped to four consecutive symbols from the ninth OFDM symbols.

Different analog beams may be applied to synchronization signal block #0 407 and synchronization signal block #1 408. The same beam may be applied to the third to sixth OFDM symbols to which synchronization signal block #0 407 is mapped, and the same beam may be applied to the ninth to twelfth OFDM symbols to which synchronization signal block #1 408 is mapped. Which analog beam is to be used in the seventh, eighth, thirteenth, and fourteenth OFDM symbols to which no synchronization signal block is mapped may be freely determined by a base station.

In FIG. 4, in case #2 402 of the subcarrier spacing of 30 kHz (430), a maximum of two synchronization signal blocks may be transmitted within a time of 0.5 ms (405) (or this corresponds to one slot length in a case where one slot is configured by 14 OFDM symbols), and accordingly, a maximum of four synchronization signal blocks may be transmitted within a time of 1 ms (or this corresponds to two-slot length in a case where one slot is configured by 14 OFDM symbols). In one example of FIG. 4, a case where synchronization signal block #0 409, synchronization signal block #1 410, synchronization signal block #2 411, and synchronization signal block #3 412 are transmitted within a time of 1 ms (i.e., two slots) is illustrated. Synchronization signal block #0 409 and synchronization signal block #1 410 may be mapped from the fifth OFDM symbol and the ninth OFDM symbol of the first slot, respectively, and synchronization signal block #2 411 and synchronization signal block #3 412 may be mapped from the third OFDM symbol and the seventh OFDM symbol of the second slot, respectively.

Different analog beams may be applied to synchronization signal block #0 409, synchronization signal block #1 410, synchronization signal block #2 411, and synchronization signal block #3 412. The same analog beam may be applied to each of the fifth to eighth OFDM symbols of the first slot, on which synchronization signal block #0 409 is transmitted, the ninth to twelfth OFDM symbols of the first slot, on which synchronization signal block #1 410 is transmitted, the third to sixth symbols of the second slot, on which synchronization signal block #2 411 is transmitted, and the seventh to tenth symbols of the second slot, on which synchronization signal block #3 412 is transmitted. Which analog beam is to be used on OFDM symbols to which no synchronization signal block is mapped may be freely determined by a base station.

In FIG. 4, in case #3 403 of the subcarrier spacing of 30 kHz (440), a maximum of two synchronization signal blocks may be transmitted within a time of 0.5 ms (406) (or this corresponds to one slot length in a case where one slot is configured by 14 OFDM symbols), and accordingly, a maximum of four synchronization signal blocks may be transmitted within a time of 1 ms (or this corresponds to two-slot length in a case where one slot is configured by 14 OFDM symbols). In one example of FIG. 4, a case where synchronization signal block #0 413, synchronization signal block #1 414, synchronization signal block #2 415, and synchronization signal block #3 416 are transmitted within a time of 1 ms (i.e., two slots) is illustrated. Synchronization signal block #0 413 and synchronization signal block #1 414 may be mapped from the third OFDM symbol and the ninth OFDM symbol of the first slot, respectively, and synchronization signal block #2 415 and synchronization signal block #3 416 may be mapped from the third OFDM symbol and the ninth OFDM symbol of the second slot, respectively.

Different analog beams may be used for synchronization signal block #0 413, synchronization signal block #1 414, synchronization signal block #2 415, and synchronization signal block #3 416, respectively. As described in the above examples, the same analog beam may be used on four OFDM symbols on which each synchronization signal block is transmitted, and which beam is to be used in OFDM symbols to which no synchronization signal block is mapped may be freely determined by a base station.

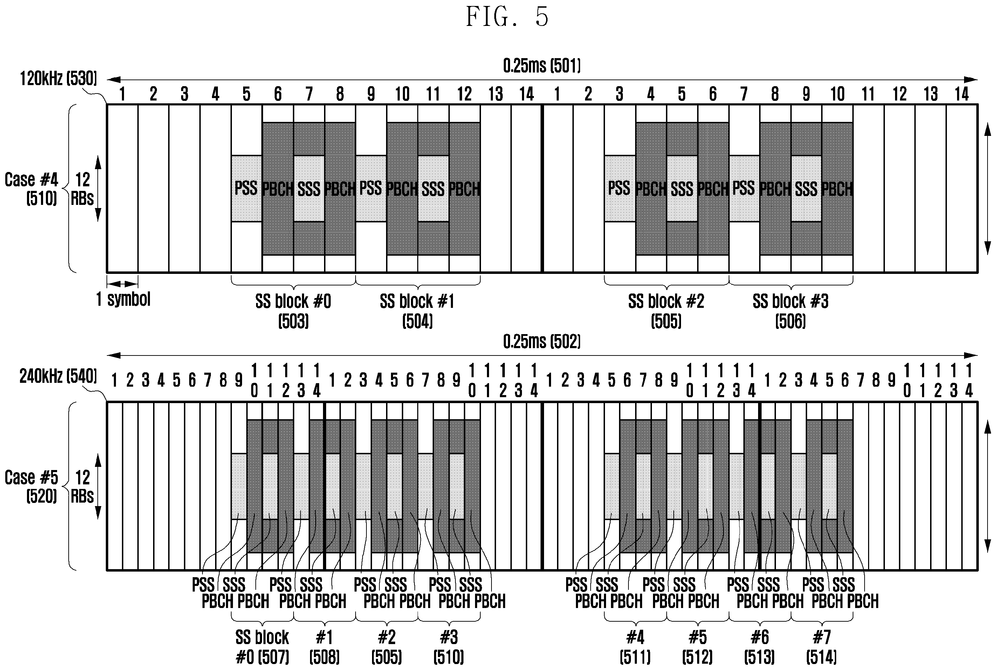

FIG. 5 is a diagram illustrating cases of transmission of a synchronization signal block in a 6 GHz or above frequency band considered in a wireless communication system to which the disclosure is applied.

In a 5G communication system, in a 6 GHz or above frequency band, a subcarrier spacing of 120 kHz (530) as in an example of case #4 510 and a subcarrier spacing of 240 kHz (540) as in an example of case #5 520 may be used in transmission of a synchronization signal block.

In case #4 510 of the subcarrier spacing of 120 kHz (530), a maximum of four synchronization signal blocks may be transmitted within a time of 0.25 ms (501) (or this corresponds to two-slot length in a case where one slot is configured by 14 OFDM symbols). In one example of FIG. 5, a case where synchronization signal block #0 503, synchronization signal block #1 504, synchronization signal block #2 505, and synchronization signal block #3 506 are transmitted in 0.25 ms (i.e., two slots) is illustrated. Synchronization signal block #0 503 and synchronization signal block #1 504 may be mapped to four consecutive symbols from the fifth OFDM symbol of the first slot and four consecutive symbols from the ninth OFDM

symbol, respectively, and synchronization signal block #2 505 and synchronization signal block #3 506 may be mapped to four consecutive symbols from the third OFDM symbol of the first slot and four consecutive symbols from the seventh OFDM symbol, respectively.

As described in the above embodiment, different analog beams may be used for synchronization signal block #0 503, synchronization signal block #1 504, synchronization signal block #2 505, and synchronization signal block #3 506, respectively. The same analog beam may be used on four OFDM symbols on which each synchronization signal block is transmitted, and which beam is to be used in OFDM symbols to which no synchronization signal block is mapped may be freely determined by a base station.

In case #5 520 of the subcarrier spacing of 240 kHz (540), a maximum of eight synchronization signal blocks may be transmitted within a time of 0.25 ms (502) (or this corresponds to four-slot length in a case where one slot is configured by 14 OFDM symbols). In one example of FIG. 5, a case where synchronization signal block #0 507, synchronization signal block #1 508, synchronization signal block #2 509, synchronization signal block #3 510, synchronization signal block #4 511, synchronization signal block #5 512, synchronization signal block #6 513, and synchronization signal block #7 514 are transmitted in 0.25 ms (i.e., four slots) is illustrated. Synchronization signal block #0 507 and synchronization signal block #1 508 may be mapped to four consecutive symbols from the ninth OFDM symbol and the thirteenth OFDM symbol of the first slot, respectively, synchronization signal block #2 509 and synchronization signal block #3 510 may be mapped to four consecutive symbols from the third OFDM symbol and the seventh OFDM symbol of the second slot, respectively, synchronization signal block #4 511, synchronization signal block #5 512, and synchronization signal block #6 513 may be mapped to four consecutive symbols from the fifth OFDM symbol, the ninth OFDM symbol, and the thirteenth OFDM symbol of the third slot, respectively, and synchronization signal block #7 514 may be mapped to four consecutive symbols from the third OFDM symbol of the fourth slot.

As described in the above embodiment, different analog beams may be used for synchronization signal block #0 507, synchronization signal block #1 508, synchronization signal block #2 509, synchronization signal block #3 510, synchronization signal block #4 511, synchronization signal block #5 512, synchronization signal block #6 513, and synchronization signal block #7 514, respectively. The same analog beam may be used on four OFDM symbols on which each synchronization signal block is transmitted, and which beam is to be used in OFDM symbols to which no synchronization signal block is mapped may be freely determined by a base station.

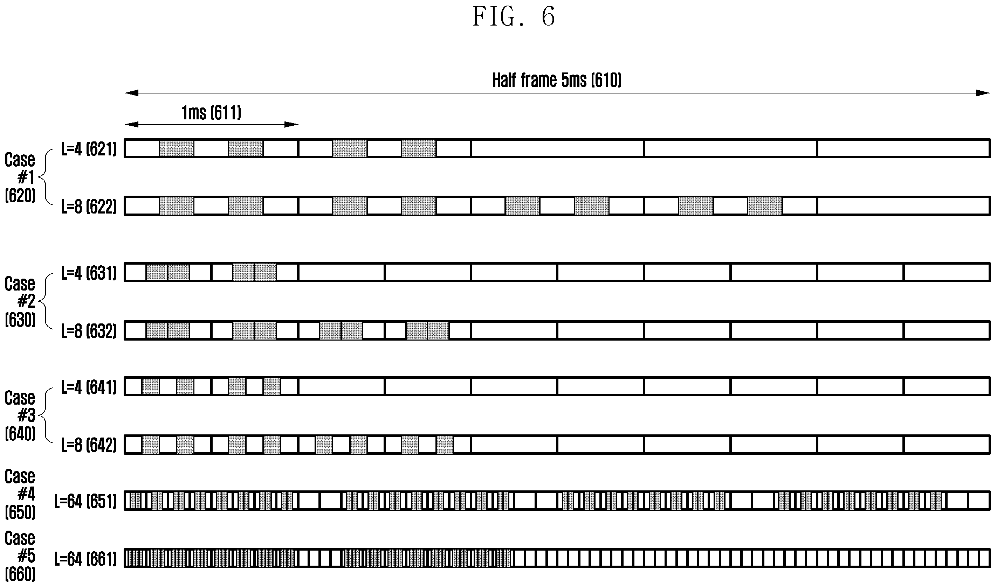

FIG. 6 is a diagram illustrating cases of transmission of a synchronization signal block according to a subcarrier spacing within a time of 5 ms in a wireless communication system to which the disclosure is applied.

In a 5G communication system, a synchronization signal block may be periodically transmitted in a unit of 5 ms (610) (this corresponds to five subframes or a half frame).

In a 3 GHz or below frequency band, a maximum of four synchronization signal blocks may be transmitted within a time of 5 ms (610). In a frequency band of 3 GHz (exclusive) to 6 GHz, a maximum of eight synchronization signal blocks may be transmitted. In a frequency band exceeding 6 GHz, a maximum of 64 synchronization signal blocks may be transmitted. As described above, subcarrier spacings of 15 kHz and 30 kHz may be used at a frequency of 6 GHz or lower.

In one example of FIG. 6, in case #1 401 of the subcarrier spacing of 15 kHz configured by one slot in FIG. 4, a synchronization signal block may be mapped to the first slot and the second slot in a frequency band of 3 GHz or lower, and thus a maximum of four synchronization signal blocks 621 may be transmitted. In a frequency band of 3 GHz (exclusive) to 6 GHz, a synchronization signal block may be mapped to the first, second, third, and fourth slots, and thus a maximum of eight synchronization signal blocks 622 may be transmitted. In case #2 402 or case #3 403 of the subcarrier spacing of 30 kHz configured by two slots in FIG. 4, a synchronization signal block may be mapped starting from the first slot in a frequency band of 3 GHz or lower, and thus a maximum of four synchronization signal blocks 631 or 641 may be transmitted. In a frequency band of 3 GHz (exclusive) to 6 GHz, a synchronization signal block may be mapped starting from the first and third slots, and thus a maximum of eight synchronization signal blocks 632 or 642 may be transmitted.

Subcarrier spacings of 120 kHz and 240 kHz may be used at a frequency exceeding 6 GHz. In one example of FIG. 6, in case #4 510 of the subcarrier spacing of 120 kHz configured by two slots in FIG. 5, a synchronization signal block may be mapped starting from the first, third, fifth, seventh, eleventh, thirteenth, fifteenth, seventeenth, twenty-first, twenty-third, twenty-fifth, twenty-seventh, thirty-first, thirty-third, thirty-fifth, and thirty-seventh slots in a frequency band exceeding 6 GHz, and thus a maximum of 64 synchronization signal blocks 651 may be transmitted. In one example of FIG. 6, in case #5 520 of the subcarrier spacing of 240 kHz configured by four slots in FIG. 5, a synchronization signal block may be mapped starting from the 1st, 5th, 9th, 13th, 21st, 25th, 29th, and 33th slots in a frequency band exceeding 6 GHz, and thus a maximum of 64 synchronization signal blocks 661 may be transmitted.

A terminal may decode a PDCCH and a PDSCH, based on system information included in a received MIB, and then obtain an SIB. The SIB may include at least one of uplink cell bandwidth-related information, a random access parameter, a paging parameter, and a parameter related to uplink power control.

In 3GPP, a new duplex method for cross-division duplex (XDD) based on NR is being discussed. XDD is a technology of using a part of a downlink resource as an uplink resource in a time division duplex (TDD) band (spectrum) of a frequency of 6 GHz or below or a frequency of 6 GHz or above, to receive, from a terminal, uplink transmission as much as

the amount of increased uplink resources so as to expand the uplink coverage of the terminal, and receive a feedback for downlink transmission from the terminal in the increased uplink resources so as to reduce feedback delay. In the disclosure, a terminal capable of receiving, from a base station, information on whether XDD is supported, and performing uplink transmission in some of downlink resources may be called an XDD terminal for convenience. In the disclosure, a duplex method in which a partial frequency resource corresponding to a downlink time resource are used for uplink is called "XDD" for convenience, but the scope of the disclosure is not limited to the term "XDD". In order to define the XDD method in a protocol and enable an XDD terminal to determine whether the XDD is supported in a particular cell (or frequency or frequency band), the following method may be considered.

First method. Other than a conventional frame structure type of an unpaired spectrum (or time division duplex, TDD) or a paired spectrum (or frequency division duplex, FDD), another frame structure type (e.g., frame structure type 2) may be introduced in order to define the XDD. Frame structure type 2 may define being supported in the particular frequency or frequency band, or an XDD base station may indicate whether XDD is supported, to a terminal by using system information. An XDD terminal may receive the system information including whether XDD is supported, and determine whether XDD is supported in the particular cell (or frequency or frequency band).

Second method. Without defining a new frame structure type, whether the XDD is additionally supported in a particular frequency or frequency band of a conventional unpaired spectrum (or TDD) may be indicated. The second method may define whether the XDD is additionally supported in a particular frequency or frequency band of a conventional unpaired spectrum, or an XDD base station may indicate whether XDD is supported, to a terminal by using system information. An XDD terminal may receive the system information including whether XDD is supported, and determine whether XDD is supported in the particular cell (or frequency or frequency band).

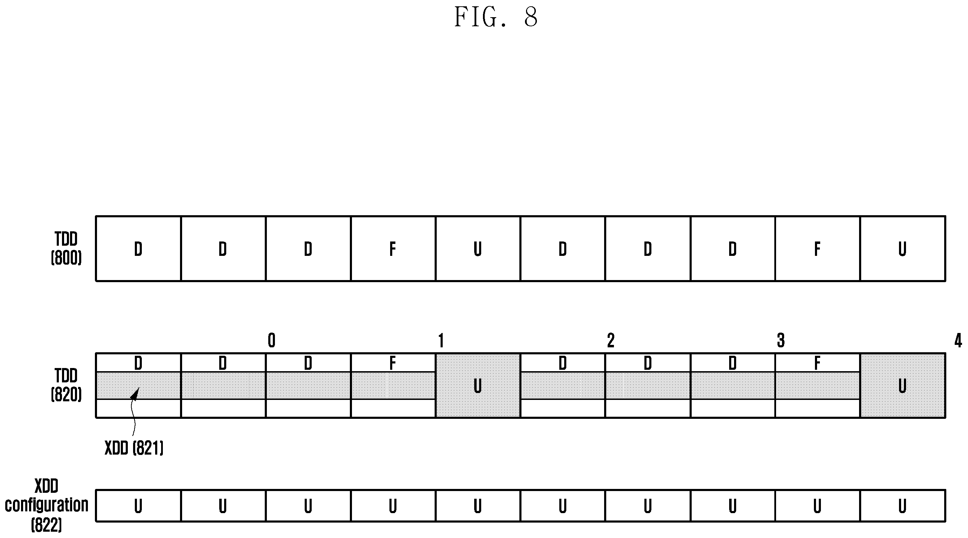

The information on whether XDD is supported in the first and second methods may be information (e.g., XDD resource configuration information in FIG. 8) indirectly indicating whether XDD is supported, by means of additionally configuring a part of a downlink resource as an uplink resource together with configuring TDD uplink (UL)-downlink (DL) resource configuration information indicating a downlink slot (or symbol) resource and an uplink slot (or symbol) resource in TDD, or may be information directly indicating whether XDD is supported.

In the disclosure, the XDD terminal may receive a synchronization signal block, as in the embodiment of FIG. 4 or FIG. 5, in an initial cell access for accessing a cell (or a base station), to obtain cell synchronization. A process of obtaining the cell synchronization may be the same as for an XDD terminal and an existing TDD terminal. Thereafter, the XDD terminal may determine whether the cell supports XDD, through MIB acquisition, SIB acquisition, or a random access process.

The system information for transmitting information on whether XDD is supported may be system information distinguished from and transmitted separately from system information for a terminal (e.g., an existing TDD terminal) supporting a different version of protocol in a cell, and the XDD terminal may obtain the entirety or part of the system information transmitted separately from the system information for the existing TDD terminal, to determine whether XDD is supported. When the XDD terminal obtains only the system information for the existing TDD terminal or system information indicating that XDD is not supported, the XDD terminal may determine that the cell (or base station) supports only TDD.

When the information on whether XDD is supported is included in system information for a terminal (e.g., an existing TDD terminal) supporting a different version of protocol, the information on whether XDD is supported may be inserted in the last part of the system information not to affect acquisition of the system information of the existing TDD terminal. When the XDD terminal fails to obtain the information on whether XDD is supported, which is inserted in the last part, or obtains information indicating that XDD is not supported, the XDD terminal may determine that the cell (or base station) supports only TDD.

As described above, when the XDD terminal determines that the cell (or base station) supports only TDD, the XDD terminal may perform a random access procedure and transmit or receive a data/control signal like the existing TDD terminal.

A base station may configure a separate random access resource for an existing TDD terminal or an XDD terminal (e.g., an XDD terminal supporting duplex communication and an XDD terminal supporting half-duplex communication), and transmit configuration information (e.g., control information or configuration information indicating a time-frequency resource available for a PRACH) on the random access resource to the XDD terminal through system information. The system information for transmitting information on the random access resource may be system information distinguished from and transmitted separately from system information for a terminal (e.g., an existing TDD terminal) supporting a different version of protocol in a cell.

The base station configures a separate random access resource for each of the XDD terminal and the TDD terminal supporting the different version of protocol, thereby being able to distinguish whether the TDD terminal supporting the different version of protocol performs a random access or the XDD terminal performs a random access. For example, the separate random access resource configured for the XDD terminal may be a resource that the existing TDD terminal determines as a downlink time resource, and the XDD terminal may perform a random access through an uplink resource (or separate random access resource) configured in some frequencies of the downlink time resource, so that the base

station may determine that the terminal which has attempted the random access in the uplink resource is an XDD terminal.

Alternatively, a base station may not configure a separate random access resource for an XDD terminal, and may configure a common random access resource for all terminals in a cell. In this case, the configuration information on the random access resource may be transmitted to all the terminals in the cell through system information, and an XDD terminal having received the system information may perform a random access in the random access resource. Thereafter, the XDD terminal may complete a random access process to enter an RRC connection mode for transmission or reception of data with the cell. After the RRC connection mode, the XDD terminal may receive, from the base station, a higher or physical signal enabling determination that a partial frequency resource of the downlink time resource are configured as an uplink resource, and transmit an uplink signal in the uplink resource as, for example, an XDD operation.

When the XDD terminal determines that the cell supports XDD, the XDD terminal transmits, to the base station, capability information including at least one of whether the terminal supports XDD, whether the terminal supports full-duplex communication or half-duplex communication, and the number of transmission or reception antennas included in (or supported by) the terminal, thereby notifying the base station that the terminal attempting to access is an XDD terminal. Alternatively, when support of half-duplex communication is necessarily implemented for an XDD terminal, whether half-duplex communication is supported as described above may be omitted from the capability information. A report of the XDD terminal on the capability information may be transmitted to the base station through a random access process, may be reported to the base station after completion of the random access process, or may be reported to the base station after entering an RRC connection mode for transmission or reception of data with the cell.

The XDD terminal may support half-duplex communication in which only one of uplink transmission and downlink reception is performed at one time like an existing TDD terminal, or may support full-duplex communication in which both uplink transmission and downlink reception are performed at one time. Therefore, the XDD terminal may report, to the base station through capability reporting, whether the XDD terminal supports half-duplex communication or full-duplex communication, and after the reporting, the base station may configure, for the XDD terminal, whether the XDD terminal is to use half-duplex communication for transmission or reception or to use full-duplex communication for transmission or reception. When the XDD terminal reports the capability of half-duplex communication to the base station, since a duplexer is normally absent, a switching gap for changing an RF between transmission and reception may be required in a case of operating in FDD or TDD.

Generally, a terminal may establish a wireless link with a network through a random access procedure, based on system information and synchronization with the network, obtained in a cell search process for a cell. A contention-based scheme or a contention-free scheme may be used for random access. The contention-based access scheme may be used for a case when a terminal performs cell selection and reselection in an initial cell access stage, for example, a case when an RRC_IDLE state is changed to an RRC_CONNECTED state. The contention-free random access may be used for a case where downlink data has arrived, a case of handover, or a case of reconfiguring uplink synchronization in positioning. Table 3 below shows an example of conditions (events) to trigger a random access procedure in a 5G system.

[Table 3]

| |
|---|
| - Initial access from RRC_IDLE;<br>- RRC Connection Re-establishment procedure;<br>- DL or UL data arrival during RRC_CONNECTED when UL synchronization status is "non-synchronized"; |
| - UL data arrival during RRC_CONNECTED when there are no PUCCH resources for SR available;<br>- SR failure;<br>- Request by RRC upon synchronous reconfiguration (e.g. handover);<br>- Transition from RRC_INACTIVE;<br>- To establish time alignment for a secondary TAG;<br>- Request for Other SI;<br>- Beam failure recovery; |

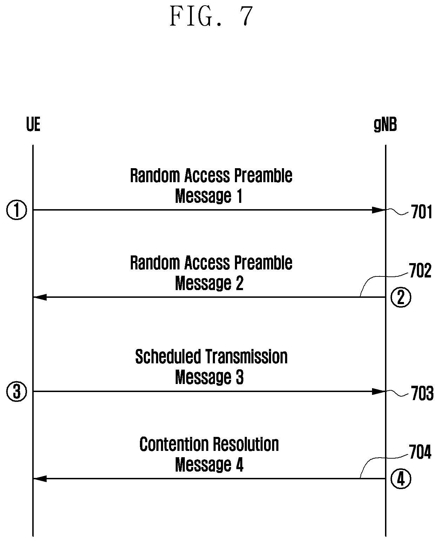

FIG. 7 is a diagram illustrating a random access procedure in a wireless communication system to which the disclosure is applied.

Referring to FIG. 7, as an example, a contention-based random access procedure is illustrated. In addition, although not illustrated, a base station may transmit a synchronization signal block as described in the above embodiments. The base station may periodically transmit a synchronization signal block by using beam sweeping. For example, the base station may transmit a synchronization signal block including a PSS/SSS (synchronization signal) and a PBCH (broadcast channel) signal by using a maximum of 64 different beams for 5 ms, and multiple synchronization signal blocks may be transmitted using different beams. A terminal may detect (select) a synchronization signal block having an optimal beam direction (e.g., a beam direction having a received signal strength which is strongest or greater than a predetermined

threshold, and transmit a preamble by using a physical random access channel (PRACH) resource related to the detected synchronization signal block. For example, as a first stage 701 of the random access procedure, the terminal may transmit a random access preamble (or message 1) to the base station. The base station having received the random access preamble may measure a transmission delay value between the terminal and the base station, and perform uplink synchronization. Specifically, the terminal may transmit a random access preamble that is randomly selected in a random access preamble set given by system information in advance. The initial transmission power of the random access preamble may be determined by a pathloss, measured by the terminal, between the base station and the terminal. In addition, the terminal may determine a transmission beam direction (or transmission beam or beam) of a random access preamble, based on a synchronization signal block received from the base station, and transmit the random access preamble by applying the determined transmission beam direction.

In a second stage 702, the base station may transmit a response (a random access response (RAR) or message 2) for a detected random access attempt to the terminal. The base station may transmit an uplink transmission timing control command to the terminal by referring to a transmission delay vale measured using the random access preamble received in the first stage. In addition, the base station may transmit an uplink resource available for the terminal and a power control command as scheduling information. The scheduling information may include control information on an uplink transmission beam of the terminal. The RAR is transmitted through a PDSCH and may include at least one of the following pieces of information.

- Random access preamble sequence index detected by network (or base station)
- Temporary cell radio network temporary identifier (TC-RNTI)
- Uplink scheduling grant
- Timing advance value

If the terminal fails to receive, from the base station for a predetermined time, an RAR that is scheduling information for message 3 in the second stage 702, the terminal may proceed to the first step 701 again. If the first step is performed again, the terminal may increase transmission power of the random access preamble by a predetermined gap and transmit same at the transmission power (this is called power ramping), thereby increasing the probability that the base station receives the random access preamble.

In the third stage 703, the terminal may transmit uplink information (scheduled transmission or message 3) including its terminal identifier (this may be called a UE contention resolution identity) (or a valid terminal identifier if the terminal already has the valid terminal identifier (C-RNTI) in the cell before initiating the random access procedure) to the base station through an uplink data channel (physical uplink shared channel (PUSCH) by using an uplink resource allocated in the second stage 702. The timing of transmitting the uplink data channel for transmitting message 3 may follow the uplink transmission timing control command received from the base station in the second stage 702. In addition, the transmission power of the uplink data channel for transmitting message 3 may be determined in consideration of a power ramping value of the random access preamble and the power control command received from the base station in the second stage 702. The uplink data channel for transmitting message 3 may be an initial uplink data signal transmitted by the terminal to the base station after the terminal transmits the random access preamble.

Lastly, in a fourth stage (704), when it is determined that the terminal has performed the random access without collision with another terminal, the base station may transmit, to the terminal, a message (contention resolution message (CR message) or message 4) including an identifier of the terminal having transmitted uplink data in the third stage 703. In relation thereto, if multiple terminals receive the same TC-RNTIs in the second stage 702, each of the multiple terminals having received the same TC-RNTIs may include its terminal identifier (UE contention resolution identify) in message 3 and transmit same to the base station in the third stage 703, and the base station may transmit message 4 (CR message) including one terminal identifier among the identifiers of the multiple terminals in order to resolve the contention. When the terminal receives message 4 (CR message) including its terminal identifier from the base station in the fourth stage 704 (or the terminal transmits message 3 including a terminal identifier (C-RNTI) in the third stage 703, and receives terminal-specific control information including a CRC based on the terminal identifier (C-RNTI) through a PDCCH in the fourth stage 704), the terminal may determine that the random access has succeeded. Therefore, a terminal, among the multiple terminals having received the same TC-RNTIs from the base station, which has identified that message 4 includes its terminal identifier may identify that the terminal has won the contention. The terminal may transmit a HARQ-ACK/NACK indicating whether message 4 has been successfully received, to the base station through an uplink control channel (physical uplink control channel, PUCCH).

If the data transmitted by the terminal in the third stage 703 collides with data of another terminal, and thus the base station fails to receive a data signal from the terminal, the base station may not perform data transmission to the terminal any more. Accordingly, when the terminal fails to receive data, which is transmitted in the fourth stage 704, from the base station for a predetermined time interval, the terminal may determine that the random access procedure has failed, and restart from the first stage 701.

As described above, in the first stage 701 of the random access process, a terminal may transmit a random access preamble on a PRACH. 64 available preamble sequences are present in each cell, and four types of long preamble formats and nine short preamble formats may be used according to a transmission type. The terminal may generate 64 available preamble sequences by using a root sequence index and a cyclic shift value which are signaled through system information, and may randomly select one sequence and use the selected sequence as a preamble.

A base station may notify the terminal of configuration information on a random access resource, for example, control information (or configuration information) indicating a time-frequency resource available for a PRACH by using at least one of an SIB, higher layer signaling (radio resource control (RRC) information), or downlink control information (DCI). A frequency resource for PRACH transmission may indicate a starting RB point of the transmission to the terminal, and the number of used RBs may be determined according to a preamble format transmitted through a PRACH and a subcarrier spacing applied thereto. A time resource for PRACH transmission may indicate, through a PRACH configuration index (0 to 255), a PRACH configuration period, a subframe index and a starting symbol including a PRACH transmission time point (this may be used together with a PRACH occasion or a transmission time point), and the number of PRACH occasions in one slot, which are configured in advance. The terminal may determine the validity of PRACH occasions indicated by the PRACH configuration index, and determine only valid PRACH occasions as PRACH occasions at which a random access preamble is transmittable. The terminal may identify a time and frequency resource, in which a random access preamble is to be transmitted, through the PRACH configuration index, the random access configuration information included in an SIB, and an SSB index selected by the terminal, and transmit a selected sequence as a preamble to the base station.

[Table 4]

| PRACH Configuration Index | Preamble format | $n_{SFN}$ mod x= y | | Subframe number | Starting symbol | Number of PRACH slots within a subframe | number of time-domain PRACH occasions within a PRACH slot | PRACH duration |
|---|---|---|---|---|---|---|---|---|
| | | x | y | | | | | |
| 0 | 0 | 16 | 1 | 1 | 0 | - | - | 0 |
| 1 | 0 | 16 | 1 | 4 | 0 | - | - | 0 |
| 2 | 0 | 16 | 1 | 7 | 0 | - | - | 0 |
| 3 | 0 | 16 | 1 | 9 | 0 | - | - | 0 |
| 4 | 0 | 8 | 1 | 1 | 0 | - | - | 0 |
| 5 | 0 | 8 | 1 | 4 | 0 | - | - | 0 |
| 6 | 0 | 8 | 1 | 7 | 0 | - | - | 0 |
| 7 | 0 | 8 | 1 | 9 | 0 | - | - | 0 |
| 8 | 0 | 4 | 1 | 1 | 0 | - | - | 0 |
| 9 | 0 | 4 | 1 | 4 | 0 | - | - | 0 |
| 10 | 0 | 4 | 1 | 7 | 0 | - | - | 0 |
| ... | ... | | | | | | | |
| 104 | A1 | 1 | 0 | 1,4,7 | 0 | 2 | 6 | 2 |
| ... | ... | | | | | | | |
| 251 | C2 | 1 | 0 | 2,7 | 0 | 2 | 2 | 6 |
| 252 | C2 | 1 | 0 | 1,4,7 | 0 | 2 | 2 | 6 |
| 253 | C2 | 1 | 0 | 0,2,4,6,8 | 0 | 2 | 2 | 6 |
| 254 | C2 | 1 | 0 | 0,1,2,3,4,5,6,7,8,9 | 0 | 2 | 2 | 6 |
| 255 | C2 | 1 | 0 | 1,3,5,7,9 | 0 | 2 | 2 | 6 |

According to an embodiment of the disclosure, a method in which an XDD terminal determines the validity of a PRACH occasion through XDD configuration and a PRACH configuration index for performing PRACH transmission, and performs a PRACH transmission at the PRACH transmission time that has been determined as being valid, and a procedure of the XDD terminal when the valid PRACH occasion and a downlink reception overlap with each other are required.

Therefore, a method of determining the valid of a PRACH occasion by the XDD terminal, and an operation of the XDD terminal when a valid PRACH occasion and a downlink reception are configured or scheduled to occur simultaneously will be described using FIG. 8, FIG. 9, and FIG. 10.

FIG. 8 is a diagram illustrating an example in which XDD is operated in a TDD band of a wireless communication system to which the disclosure is applied.

At the upper part of FIG. 8, a case where TDD 800 is operated in a particular frequency band is illustrated. In a cell operating the TDD 800, a base station may transmit or receive, to or from an existing TDD terminal or an XDD terminal, a signal including data/control information in a downlink slot (or symbol), an uplink slot (or symbol), and a flexible slot (or symbol), based on configuration of TDD UL-DL resource configuration information indicating a downlink slot (or symbol) resource and an uplink slot (or symbol) resource of the TDD 800.

Next, at the lower part of FIG. 8, a case where XDD 821 is operated together with TDD 820 in a particular frequency band is illustrated. For example, in the TDD 820, a base station may configure a part of a downlink resource as an uplink resource 821, and may use the uplink resource for uplink transmission of an XDD terminal. Information 822 on the uplink resource 821 configured for the XDD may be used as information on whether XDD is supported, and the XDD resource configuration information 822 may be transmitted in addition to configuration of TDD UL-DL resource configuration information indicating a downlink slot (or symbol) resource and an uplink slot (or symbol) resource of the TDD 820.

The XDD resource configuration information 822 may be information including at least one of time resources such as a downlink slot (or symbol), an uplink slot (or symbol), and a flexible slot (or symbol), and may also include information on frequency resources as well as information on time resources. For example, the XDD resource configuration information may include position information on a frequency region configured by some frequencies, some physical resource blocks (PRBs), or one or more groups of PRBs in the entire frequency band of the TDD 820, and thus time resources of the XDD resource configuration information 822 may be applied only to a partial frequency region. Alternatively, pieces of information on time resources (information including at least one of time resources such as a downlink slot (or symbol), an uplink slot (or symbol), and a flexible slot (or symbol)) may be included for all frequency bands of TDD 820, that is, frequency regions each configured by PRBs or one or more groups of PRBs, respectively.

Even in a cell in which the XDD 821 is supported, TDD terminals may transmit or receive a data/control signal to or from a base station, based on the TDD UL-DL resource configuration information, and XDD terminals may transmit or receive a data/control signal to or from the base station by considering both the TDD UL-DL resource configuration information and the XDD resource configuration information 822, or may transmit or receive a data/control signal to or from the base station by considering only the XDD resource configuration information 822.

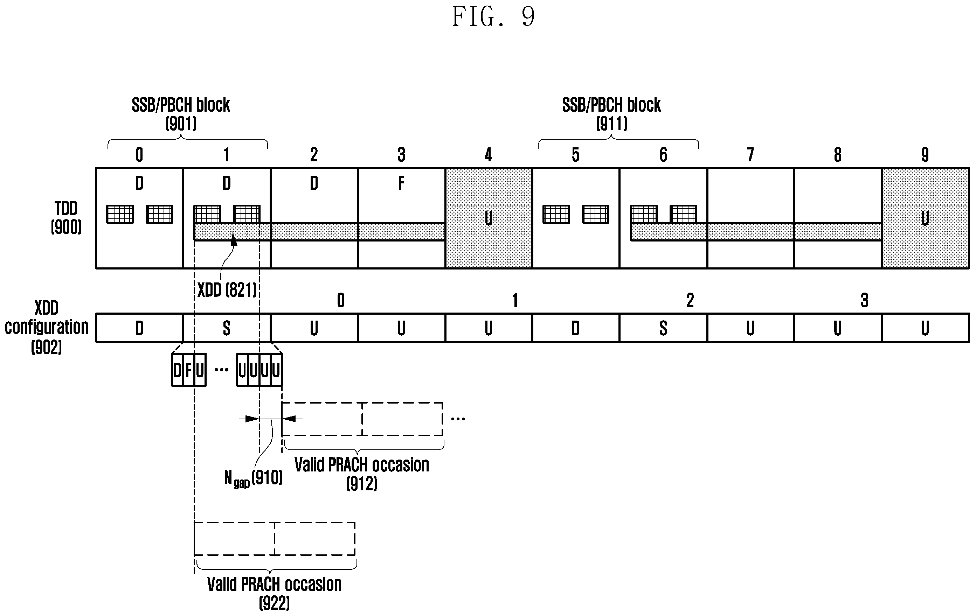

Next, a method of determining the validity of a PRACH occasion by an XDD terminal will be described using FIG. 9.

FIG. 9 is a diagram illustrating an example in which XDD is operated together with TDD in a frequency band to which the disclosure is applied.

A base station operates XDD 901, based on XDD resource configuration information 902, and the base station and an XDD terminal may transmit or receive a data/control signal with each other in an uplink or downlink resource corresponding to the XDD resource configuration information 902. First, a method of determining the validity of a PRACH occasion by a terminal in TDD 900 is described.

In the TDD 900, when TDD UL-DL resource configuration information is not provided to a terminal, a PRACH occasion is defined to be valid when the PRACH occasion does not precede a synchronization signal block in a PRACH slot and starts after $N_{gap}$ symbols immediately after the last synchronization signal block symbol in the PRACH slot. Alternatively, in the TDD 900, when TDD UL-DL resource configuration information is provided to a terminal, a PRACH occasion is defined to be valid when the PRACH occasion is uplink symbols, or the PRACH occasion does not precede a synchronization signal block in a PRACH slot, starts after $N_{gap}$ symbols immediately after the last downlink symbol, and starts after $N_{gap}$ symbols immediately after the last synchronization signal block symbol in the PRACH slot. Here, $N_{gap}$ may be determined based on a pre-arranged method according to a standard. For example, when the subcarrier spacing (SCS) of a PRACH preamble is 1.25 kHz or 5 kHz, $N_{gap}$ may be determined as 0. For example, when the subcarrier spacing (SCS) of a PRACH preamble is 15 kHz, 30 kHz, 60 kHz, or 120 kHz, $N_{gap}$ may be determined as 2. For example, when the subcarrier spacing (SCS) of a PRACH preamble is 480 kHz, $N_{gap}$ may be determined as 8. For example, when the subcarrier spacing (SCS) of a PRACH preamble is 960 kHz, $N_{gap}$ may be determined as 16.

In FDD, all PRACH occasions are defined to be valid.

The following method may be proposed for an XDD terminal to determine the validity of a PRACH occasion.

According to an embodiment, an XDD terminal may determine the validity of a PRACH occasion according to

whether TDD UL-DL resource configuration information is provided. For example, when TDD UL-DL resource configuration information is not provided to an XDD terminal, a PRACH occasion may be defined to be valid when the PRACH occasion does not precede a synchronization signal block in a PRACH slot and starts after $N_{gap}$ symbols immediately after the last synchronization signal block symbol in the PRACH slot. In addition, for example, in the TDD 900, when TDD UL-DL resource configuration information is provided to an XDD terminal, a PRACH occasion may be defined to be valid when the PRACH occasion is uplink symbols corresponding to the TDD UL-DL resource configuration information, or the PRACH occasion does not precede a synchronization signal block in a PRACH slot, starts after $N_{gap}$ symbols immediately after the last downlink symbol corresponding to the TDD UL-DL resource configuration information, and starts after $N_{gap}$ symbols immediately after the last synchronization signal block symbol in the PRACH slot. The above embodiment may be applied to a case where an XDD terminal accesses a cell supporting only TDD by using system information, fails to obtain information on whether XDD is supported, or obtains information indicating that XDD is not supported.

According to an embodiment, when the XDD resource configuration information 902 is provided to an XDD terminal, a PRACH occasion may be defined, regardless of whether TDD UL-DL resource configuration information is provided, to be valid when the PRACH occasion is uplink symbols corresponding to the XDD resource configuration information 902, or the PRACH occasion does not precede a synchronization signal block in a PRACH slot, starts after $N_{gap}$ symbols immediately after the last downlink symbol, and starts after $N_{gap}$ symbols immediately after the last synchronization signal block symbol in the PRACH slot. The above embodiment may be applied to a case where an XDD terminal determines that a cell supports XDD, by using system information, and receives the XDD resource configuration information 902.

According to an embodiment, an XDD terminal may determine the validity of a PRACH occasion according to whether TDD UL-DL resource configuration information is provided, and the XDD resource configuration information 902. For example, when TDD UL-DL resource configuration information and the XDD resource configuration information 902 are both not provided to an XDD terminal, a PRACH occasion may be defined to be valid when the PRACH occasion does not precede a synchronization signal block in a PRACH slot and starts after $N_{gap}$ symbols immediately after the last synchronization signal block symbol in the PRACH slot. In addition, for example, in the TDD 900, when only one of TDD UL-DL resource configuration information or the XDD resource configuration information 902 is provided to an XDD terminal, a PRACH occasion may be defined to be valid when the PRACH occasion is uplink symbols corresponding to the provided resource configuration information, or does not precede a synchronization signal block in a PRACH slot, starts after $N_{gap}$ symbols immediately after the last downlink symbol corresponding to the provided resource configuration information, and starts after $N_{gap}$ symbols immediately after the last synchronization signal block symbol in the PRACH slot. In addition, in the TDD 900, when TDD UL-DL resource configuration information and the XDD resource configuration information 902 are both provided to an XDD terminal, a PRACH occasion is defined to be valid when the PRACH occasion is uplink symbols in a union of uplink symbols corresponding to the TDD UL-DL resource configuration information and uplink symbols corresponding to the XDD resource configuration information 902, or the PRACH occasion does not precede a synchronization signal block in a PRACH slot, starts after $N_{gap}$ symbols immediately after the last downlink symbol in an intersection of downlink symbols corresponding to the TDD UL-DL resource configuration information and downlink symbols corresponding to the XDD resource configuration information 902, and starts after $N_{gap}$ symbols immediately after the last synchronization signal block symbol in the PRACH slot. The above embodiment may be applied to both a case where an XDD terminal accesses a cell supporting only TDD by using system information, fails to obtain information on whether XDD is supported, or obtains information indicating that XDD is not supported, or a case where an XDD terminal determines that a cell supports XDD, by using system information, and receives the XDD resource configuration information 902.

According to an embodiment, in a case where the XDD resource configuration information 902 is provided to an XDD terminal, the XDD terminal may determine that a PRACH occasion is valid, when the PRACH occasion is uplink symbols corresponding to the XDD resource configuration information 902 (as indicated by reference numeral 922). The above embodiment may be applied to a case where an XDD terminal determines that a cell supports XDD, by using system information, and receives the XDD resource configuration information 902.

According to an embodiment, a criterion of determining the validity of a random access transmission occasion may be newly defined for the XDD terminal. For example, the XDD terminal may determine, as a valid PRACH occasion, symbols or slots in which the XDD terminal is to actually transmit a PRACH preamble or intends to transmit a PRACH preamble. Alternatively, a base station (or cell) may indicate information indicating the validity of the PRACH occasion (e.g., information indicating the position of a valid PRACH occasion (i.e., information on the position of slots/symbols)) to an XDD terminal through a higher signal (or system information). Alternatively, a base station (or cell) may indicate a ratio of valid occasions to the PRACH occasions through a higher signal (or system information), and define the precise position of the occasions in a protocol. For example, when the ratio is indicated as a half, even-numbered slots in possible PRACH occasions may be defined to be valid.

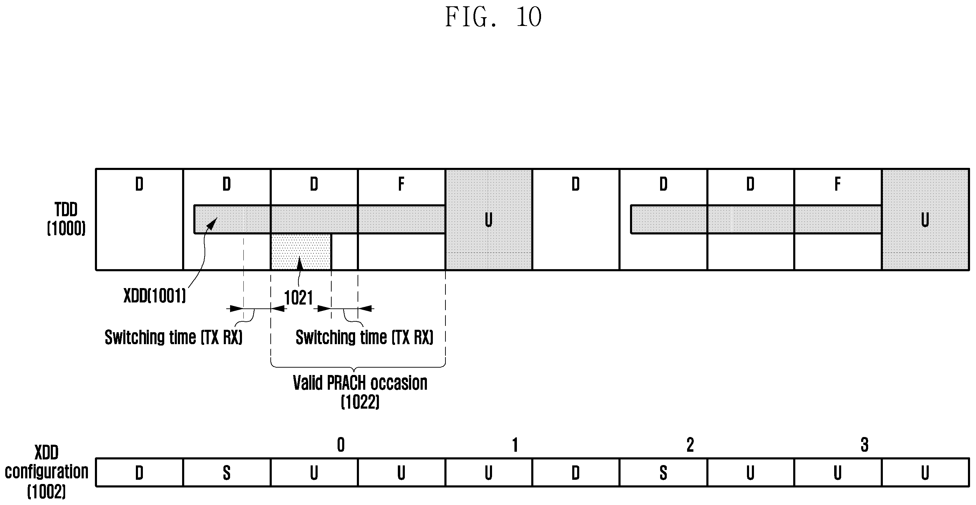

Next, an operation of an XDD terminal when a valid PRACH occasion and a downlink reception are configured or scheduled to occur simultaneously will be described using FIG. 10.

FIG. 10 is a diagram illustrating an XDD terminal operation when a valid PRACH occasion and a downlink reception occur at the same time in a wireless communication system to which the disclosure is applied.

FIG. 10 illustrates XDD 1001 being operated together with TDD 1000 in a particular frequency band. A base station operates XDD 1001, based on XDD resource configuration information 1002, and the base station and an XDD terminal may transmit or receive a data/control signal with each other in an uplink or downlink resource corresponding to the XDD resource configuration information 1002.

FIG. 10 illustrates a situation where a valid PRACH occasion (valid PRACH occasion) described with reference to FIG. 9 and a reception of a downlink data/control channel or a downlink RS, which is configured to be received in a particular resource (frequency and time) through a higher signal in advance or scheduled by a downlink control channel, simultaneously occur in a particular time interval. At the valid PRACH occasion, the terminal is able to transmit a random access preamble, and thus when the terminal performs transmission or reception, based on half-duplex communication, a terminal operation of a case where the time interval of the valid PRACH occasion and a downlink reception time interval collide with each other may be required. In FIG. 10, downlink data colliding with a valid PRACH occasion in a particular time interval will be mainly described. However, the disclosure is also applicable to a downlink reception, such as a downlink control channel/downlink RS, instead of the downlink data.

First, it may be assumed in FIG. 10 that an XDD terminal reports a capability signal indicating that full-duplex communication is supported, or an XDD terminal is configured, by a base station, to perform transmission or reception in full-duplex communication. The XDD terminal may be indicated, by a pre-configured higher signal or a downlink control channel, to receive downlink data 1021 in a particular resource. The XDD terminal may determine that a time interval 1022 of the valid PRACH occasion and a time interval indicated to receive the downlink data 1021 overlap with each other. Even though the time interval 1022 of the valid PRACH occasion and the time interval indicated to receive the downlink data 1021 overlap with each other, if it is assumed that the XDD terminal reports a capability signal indicating that full-duplex communication is supported, or the XDD terminal is configured, by the base station, to perform transmission or reception in full-duplex communication, the XDD terminal is able to receive the downlink data 1021 even in the time interval 1022 in which the valid PRACH occasion is present.

Next, it may be assumed in FIG. 10 that an XDD terminal reports a capability signal indicating that half-duplex communication is supported, or even when a capability signal indicating that full-duplex communication is supported (or half-duplex communication is not supported) is reported, an XDD terminal is configured, by a base station, to perform transmission or reception in half-duplex communication.

In FIG. 10, a situation where the valid PRACH occasion and a reception of downlink data by a pre-configured higher signal or a downlink control channel simultaneously occur in a particular time interval may be considered.

In FIG. 10, the XDD terminal may be indicated, by a pre-configured higher signal or a downlink control channel, to receive the downlink data 1021 in a particular resource. The XDD terminal may determine that the time interval 1022 of the valid PRACH occasion and a time interval in a slot indicated to receive the downlink data 1021 overlap with each other. In this case, the XDD terminal may not receive or not expect to receive the downlink data 1021 in the slot. Alternatively, the XDD terminal may not receive or not expect to receive the downlink data 1021 only in overlapping symbols. An XDD terminal operating in half-duplex communication may require a switching interval for switching an RF to reception from transmission or to transmission from reception. In more detail about the RF switching interval, the switching interval may be defined as $N_{gap}$ or an RF switching interval. When the switching interval is defined as $N_{gap}$, $N_{gap}$ defined in TDD 1000 may be used as a minimum interval in which the RF is switchable, and a different value may also be used. Alternatively, the switching interval may be defined as the RF switching interval so as to enable a switching interval required for the XDD terminal to be explicitly defined and determined in a protocol, or the value to be received from the base station.

In the above case, the low complexity terminal may not receive or not expect to receive downlink data in a slot of which at least one symbol overlaps with a reception of the downlink data in a valid PRACH occasion including such $N_{gap}$ or an RF switching interval. Alternatively, the low complexity terminal may not receive or not expect to receive the downlink data only in the overlapping symbols.

A higher signal (or system information) indicating to the XDD terminal that uplink resources are configured in all slots and all the uplink resources are PRACH occasions may be received. All the PRACH occasions may be valid, and thus an XDD terminal supporting half-duplex communication may not able to receive the downlink data in downlink slots all in which uplink resources are configured, according to the embodiment. The disclosure proposes the following methods in order to solve this problem.

First, uplink resources for the XDD terminal are configured and used only in some downlink slots according to the implementation of the base station. Therefore, in a case where an XDD terminal receives an XDD resource configuration indicating the configuring of the uplink resource, even when a higher signal (or system information) indicating to the XDD terminal that all uplink resources are PRACH occasions is received, the XDD terminal may determine that the XDD terminal is able to receive the downlink data in remaining downlink slots other than downlink slots available for uplink transmission in the PRACH occasions. A PRACH occasion for the XDD terminal may be indicated separately from a TDD terminal in the corresponding cell. For example, a higher signal (or system information) indicating a PRACH configuration

index including information on the PRACH occasion may be separately transmitted to the XDD terminal.

Secondly, an XDD terminal determines whether to prioritize a PRACH occasion or a downlink reception, according to the implementation of the XDD terminal. Therefore, even if uplink resources are configured in all downlink slots, an XDD terminal may perform a downlink reception or perform a PRACH transmission at a valid PRACH occasion according to determination of the XDD terminal.

Thirdly, information relating to whether an XDD terminal priorities a valid PRACH occasion or a downlink reception in a particular time resource (slot or symbol) may be indicated by a base station to the XDD terminal. The terminal may be transmitted to the XDD terminal as a higher signal or a system signal. The XDD terminal may receive the signal, and determine whether to drop a reception of downlink transmission indicated or scheduled by the base station by prioritizing a valid PRACH occasion in a particular time resource, or to receive the downlink transmission indicated or scheduled by the base station rather than the valid PRACH occasion.

Fourthly, each of the first, second, and third methods may be applied according to a downlink channel/signal. For example, the second method is applied to reception of a synchronization signal block, and the third method may be applied to reception of a CSI-RS or PDCCH/PDSCH. Which method to be applied to each downlink channel/signal may be defined in a protocol. Alternatively, a base station may indicate, to an XDD terminal through system information, which method to be applied to each downlink channel/signal, and the XDD terminal may receive the information and determine same.

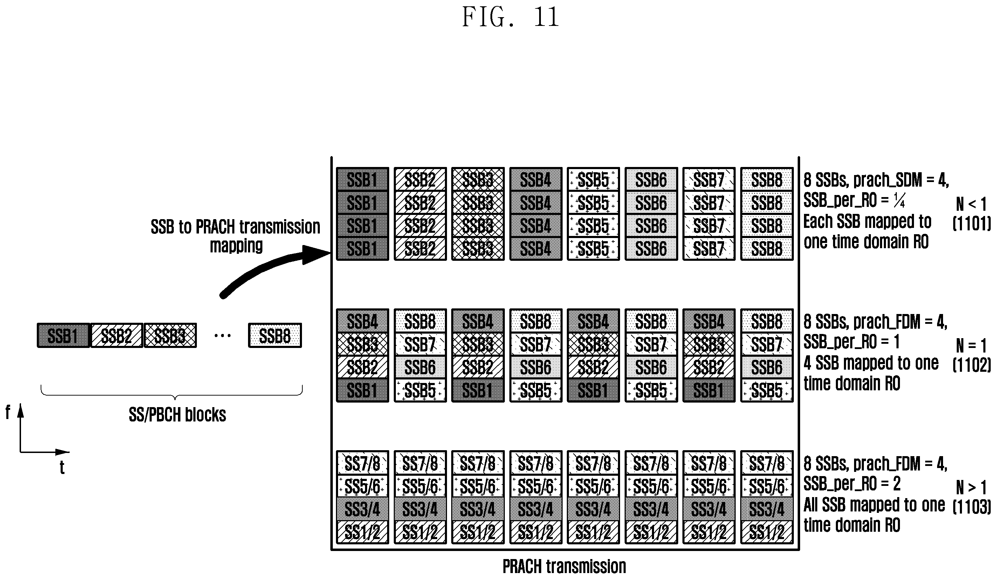

FIG. 11 is a diagram illustrating a relation between a synchronization signal block and a valid random access occasion in a wireless communication system to which the disclosure is applied.

First, in a 5G system, a terminal may receive the synchronization signal block, and the same block may configure, for the terminal, control resource set (CORESET) #0 (this may correspond to a control resource set having a control resource set index or identity (ID) of 0) and search space #0 (this may correspond to a search space having a search space index or ID of 0). The terminal may monitor control resource set #0 under the assumption that the selected synchronization signal block and a demodulation reference signal (DMRS) transmitted in control resource set #0 are quasi-co-located (QCL). The terminal may receive system information, based on downlink control information transmitted in control resource set #0. The terminal may obtain PRACH-related configuration information for a random access from the received system information. The terminal having obtained the PRACH-related configuration information may transmit, to a base station, a preamble in a PRACH, based on the index of the received synchronization signal block at the time of performing the random access (e.g., the terminal may transmit a preamble in a PRACH by using a transmission beam having a QCL relation with a reception beam when the synchronization signal block having the index is received), and the base station having received the preamble through the PRACH from the terminal may obtain information on the index of the synchronization signal block selected (received) by the terminal. That is, the terminal transmits a PRACH preamble for the random access in a random access occasion mapped to the index of the received synchronization block.

In FIG. 11, SSB #*i* denotes index #*i* of each synchronization signal block described with reference to FIG. 4 or FIG. 5. In FIG. 11, N denotes the number of synchronization signal blocks mapped to one random access occasion, and 4 random access occasions are multiplexed in frequency in one time interval (e.g., at least one symbol interval, at least one slot interval, or at least one subframe interval). As an example of N being smaller than 1 (N<1, 1101), 4 random access occasions multiplexed in the frequency domain are mapped to one synchronization signal block. That is, one random access occasion is mapped to 1/4 synchronization signal blocks. Next, as an example of N being equal to 1 (N=1, 1102), 4 random access occasions multiplexed in the frequency domain are mapped to four synchronization signal blocks. That is, one random access occasion is mapped to one synchronization signal block.

Next, as an example of N being greater than 1 (N>1, 1103), 4 random access occasions multiplexed in frequency are mapped to eight synchronization signal blocks (SSB#1 to SSB#8) (SSBs are simply illustrated as SSs in FIG. 9). That is, one random access occasion is mapped to two synchronization signal blocks.

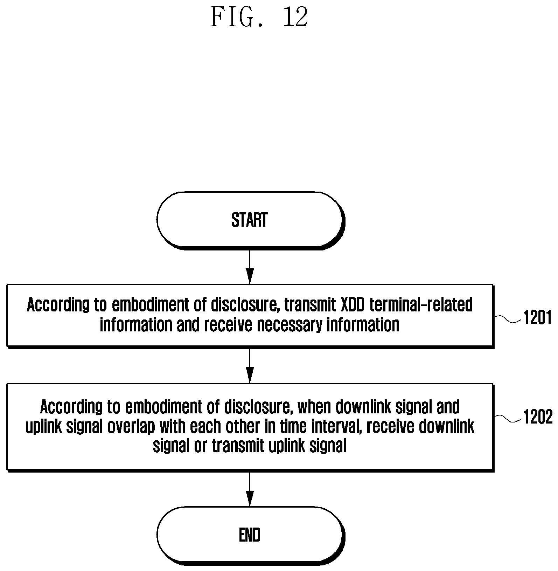

FIG. 12 is a flowchart illustrating an operation of an XDD terminal in a wireless communication system according to an embodiment of the disclosure.

In operation 1201, an XDD terminal may receive, from a base station, at least one of XDD resource configuration information, configuration information including resource information for random access, TDD cell information, valid random access occasion transmission position information, resource information on a configuration-based downlink signal or a configuration-based uplink signal, and full-duplex communication or half-duplex communication configuration information. The configuration information may be provided to the XDD terminal through an SIB, an RRC message, or DCI. In addition, the XDD terminal may transmit, to the base station, capability information of the XDD terminal, including whether full-duplex communication or half-duplex communication is supported.

In operation 1202, the XDD terminal may determine the validity of a PRACH occasion according to embodiments of the disclosure, based on at least one of whether the cell supports only TDD or additionally supports XDD, whether the XDD terminal supports half-duplex communication or full-duplex communication, or whether the base station has configured half-duplex communication or full-duplex communication. When the determined valid PRACH occasion overlaps with a downlink signal reception in a time interval, the XDD terminal may perform the uplink signal transmission or the downlink signal reception.

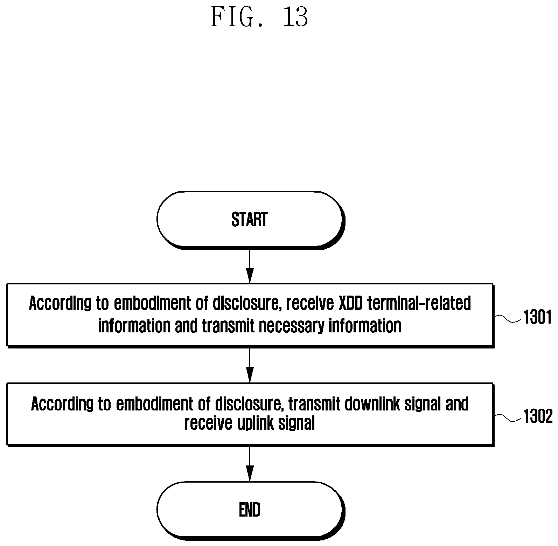

FIG. 13 is a flowchart illustrating an operation of a base station in a wireless communication system according to an embodiment of the disclosure.

In operation 1301, a base station may transmit, to an XDD terminal, at least one of XDD resource configuration information, configuration information including resource information for random access, TDD cell information, valid random access occasion transmission position information, resource information on a configuration-based downlink signal or a configuration-based uplink signal, and full-duplex communication or half-duplex communication configuration information. The configuration information may be provided to the terminal through an SIB, an RRC message, or DCI. In addition, the base station may receive, to the XDD terminal, capability information of the XDD terminal, including whether full-duplex communication or half-duplex communication is supported.

In operation 1302, the base station may receive an uplink signal and transmit a downlink signal. Alternatively, according to an embodiment of the disclosure, the base station may determine the validity of a PRACH occasion according to embodiments of the disclosure, based on at least one of whether the cell supports only TDD or additionally supports XDD, whether the XDD terminal supports half-duplex communication or full-duplex communication, or whether the base station has configured half-duplex communication or full-duplex communication. When the determined valid PRACH occasion overlaps with a downlink signal reception in a time interval, the base station may perform the uplink signal reception or the downlink signal transmission.

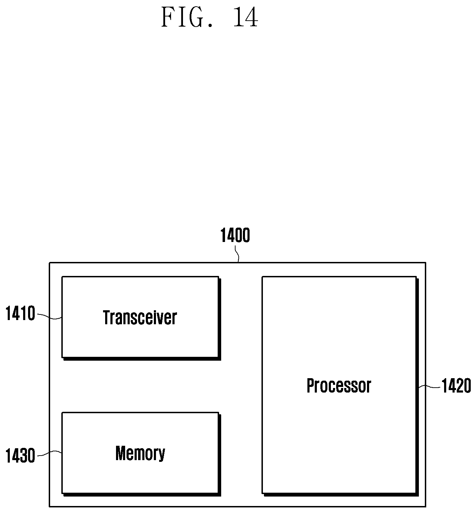

FIG. 14 is a diagram illustrating a structure of a terminal according to an embodiment of the disclosure.

Referring to FIG. 14, a terminal 1400 may include a transceiver 1410, a processor or controller 1420, and a memory 1430. The terminal 1400 according to the disclosure may operate according to a method described in the embodiments of FIG. 8 to FIG. 11 in a wireless communication system to which the disclosure is applied as described above with reference to FIG. 1 to FIG. 7. However, the elements of the terminal 1400 according to an embodiment are not limited to the above example. According to another embodiment, the terminal 1400 may include more elements than the above elements, and may also include fewer elements or more elements in a case of an XDD terminal. In addition, in a particular case, the transceiver 1410, the processor 1420, and the memory 1430 may be implemented in a single chip type.

The transceiver 1410 may also be configured by a transmitter and a receiver according to another embodiment. The transceiver 1410 may transmit or receive a signal to or from a base station. The signal may include control information and data. To this end, the transceiver 1410 may include an RF transmitter that up-converts and amplifies a frequency of a transmitted signal, an RF receiver that low-noise amplifies a received signal and down-converts the frequency, and the like. In addition, the transceiver 1410 may receive a signal through a wireless channel and output the signal to the processor 1420, and may transmit a signal output from the processor 1420, through a wireless channel.

The processor 1420 may control a series of processes allowing the terminal 1400 to operate according to an embodiment described above.

The memory 1430 may store control information or data such as a transmission resource configuration included in a signal obtained by the terminal 1400, and may have a region for storing data required for control of the processor 1420, and data generated at the time of control by the processor 1420.

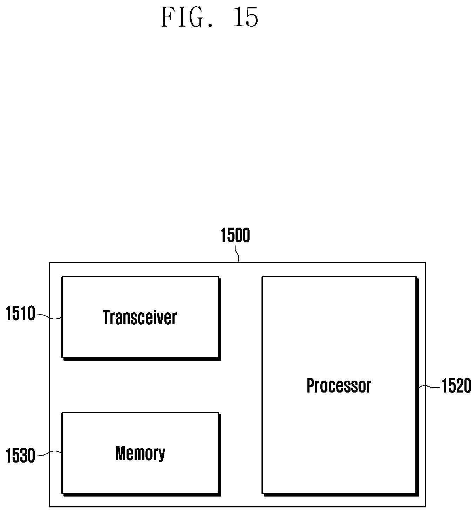

FIG. 15 is a diagram illustrating a structure of a base station according to an embodiment of the disclosure.

Referring to FIG. 15, a base station 1500 may include a transceiver 1510, a processor or controller 1520, and a memory 1530. The base station 1500 according to the disclosure may operate according to a method described in the embodiments of FIG. 8 to FIG. 11 in a wireless communication system to which the disclosure is applied as described with reference to FIG. 1 to FIG. 7. However, the elements of the base station 1500 according to an embodiment are not limited to the above example. According to another embodiment, the base station 1500 may also include more or fewer elements than the above elements. In addition, in a particular case, the transceiver 1510, the processor 1520, and the memory 1530 may be implemented in a single chip type. The transceiver 1510 may also be configured by a transmitter and a receiver according to another embodiment. The transceiver 1510 may transmit or receive a signal to or from a terminal. The signal may include control information and data. To this end, the transceiver 1510 may include an RF transmitter that up-converts and amplifies a frequency of a transmitted signal, an RF receiver that low-noise amplifies a received signal and down-converts the frequency, and the like. In addition, the transceiver 1510 may receive a signal through a wireless channel and output the signal to the processor 1520, and may transmit a signal output from the processor 1520, through a wireless channel.

The processor 1520 may control a series of processes so that the base station 1500 may operate according to an embodiment described above. The memory 1530 may store control information or data such as a transmission resource configuration determined by the base station 1500, or control information or data received from a terminal, and may have a region for storing data required for control of the processor 1520, and data generated at the time of control by the processor 1520.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented within the scope the

present invention as defined by the appended set of claims.

## Claims

1. A method performed by a terminal (1400) in a communication system, the method comprising:

   receiving, from a base station (1500), first configuration information of time division duplex, TDD, and second configuration information related to a part of a frequency resource corresponding to a downlink time resource configured by the first configuration information being used for an uplink resource;
   identifying at least one valid physical random access channel, PRACH, occasion among a plurality of PRACH occasions based on whether each of the plurality of PRACH occasions is configured with at least one uplink symbol, wherein the at least one uplink symbol is included in a union of at least one uplink symbol configured by the first configuration information and at least one uplink symbol configured by the second configuration information;
   receiving, from the base station (1500), third configuration information on priority between the at least one valid PRACH occasion and downlink reception;
   identifying that the at least one valid PRACH occasion and a downlink time resource corresponding to the downlink reception collide with each other;
   determining whether to transmit, to the base station (1500), a random access preamble or receive, from the base station (1500), the downlink reception, based on the third configuration information; and
   transmitting, to the base station (1500), the random access preamble on the at least one valid PRACH occasion based on determining to transmit the random access preamble.

2. The method of claim 1, wherein the at least one uplink symbol configured by the second configuration information corresponds to the part of the frequency resource.

3. The method of claim 1, further comprising identifying the at least one valid PRACH occasion based on whether each of the plurality of PRACH occasions does not precede a synchronization signal block, SSB, in a PRACH slot, starts at least a predetermined number of symbols after a last downlink symbol of an intersection of at least one downlink symbol configured by the first configuration information and at least one downlink symbol configured by the second configuration information, and starts at least the predetermined number of symbols after a last SSB symbol.

4. A method performed by a base station (1500) in a communication system, the method comprising:

   transmitting, to a terminal (1400), first configuration information of time division duplex, TDD, and second configuration information related to a part of a frequency resource corresponding to a downlink time resource configured by the first configuration information is used for an uplink resource;
   identifying priority for the terminal (1400) between PRACH transmission on at least one valid PRACH occasion and downlink reception, wherein the at least one valid PRACH occasion and a downlink time resource corresponding to the downlink reception collide with each other;
   transmitting, to the terminal (1400), third configuration information on the priority; and
   receiving, from the terminal (1400), a random access preamble on the at least one valid PRACH occasions based on priority of the PRACH transmission being higher than priority of the downlink reception,
   wherein the at least one valid PRACH occasion is identified among a plurality of PRACH occasions based on whether each of the plurality of PRACH occasions is configured with at least one uplink symbol, wherein the at least one uplink symbol is included in a union of at least one uplink symbol configured by the first configuration information and at least one uplink symbol configured by the second configuration information.

5. The method of claim 4, wherein the at least one uplink symbol configured by the second configuration information corresponds to the part of the frequency resource.

6. The method of claim 4, wherein the at least one valid PRACH occasion is identified based on whether each of the plurality of PRACH occasions does not precede a synchronization signal block, SSB, in a PRACH slot, starts at least a predetermined number of symbols after a last downlink symbol of an intersection of at least one downlink symbol configured by the first configuration information and at least one downlink symbol configured by the second configuration information, and starts at least the predetermined number of symbols after a last SSB symbol.

**7.** A terminal (1400) for a communication system, the terminal (1400) comprising:

a transceiver (1410); and
a processor (1420) coupled with the transceiver and configured to:

receive, from a base station (1500), first configuration information of time division duplex, TDD, and second configuration information related to a part of a frequency resource corresponding to a downlink time resource configured by the first configuration information being used for an uplink resource;
identify at least one valid physical random access channel, PRACH, occasion among a plurality of PRACH occasions based on whether each of the plurality of PRACH occasions is configured with at least one uplink symbol, wherein the at least one uplink symbol is included in a union of at least one uplink symbol configured by the first configuration information and at least one uplink symbol configured by the second configuration information;
receive, from the base station (1500), third configuration information on priority between the at least one valid PRACH occasion and downlink reception;
identify that the at least one valid PRACH occasion and a downlink time resource corresponding to the downlink reception collide with each other;
determine whether to transmit, to the base station (1500), a random access preamble or receive, from the base station (1500), the downlink reception, based on the third configuration information; and
transmit, to the base station (1500), the random access preamble on the at least one valid PRACH occasion based on determining to transmit the random access preamble.

**8.** The terminal of claim 7, wherein the at least one uplink symbol configured by the second configuration information corresponds to the part of the frequency resource.

**9.** The terminal (1400) of claim 7, wherein the processor (1420) is further configured to identify the at least one valid PRACH occasion based on whether each of the plurality of PRACH occasions does not precede a synchronization signal block, SSB, in a PRACH slot, starts at least a predetermined number of symbols after a last downlink symbol of an intersection of at least one downlink symbol configured by the first configuration information and at least one downlink symbol configured by the second configuration information, and starts at least the predetermined number of symbols after a last SSB symbol.

**10.** A base station (1500) for a communication system, the base station (1500) comprising:

a transceiver (1510); and
a processor (1520) coupled with the transceiver (1510) and configure to:

transmit, to a terminal (1400), first configuration information of time division duplex, TDD, and second configuration information related to a part of a frequency resource corresponding to a downlink time resource configured by the first configuration information is used for an uplink resource;
identify priority for the terminal (1400) between PRACH transmission on at least one valid PRACH occasion and downlink reception, wherein the at least one valid PRACH occasion and a downlink time resource corresponding to the downlink reception collide with each other;
transmit, to the terminal (1400), third configuration information on the priority; and
receive, from the terminal (1400), a random access preamble on the at least one valid PRACH occasions based on priority of the PRACH transmission being higher than priority of the downlink reception,
wherein the at least one valid PRACH occasion is identified among a plurality of PRACH occasions based on whether each of the plurality of PRACH occasions is configured with at least one uplink symbol, wherein the at least one uplink symbol is included in a union of at least one uplink symbol configured by the first configuration information and at least one uplink symbol configured by the second configuration information.

**11.** The base station (1500) of claim 10, wherein the at least one uplink symbol configured by the second configuration information corresponds to the part of the frequency resource.

**12.** The base station (1500) of claim 10, wherein the at least one valid PRACH occasion is identified based on whether each of the plurality of PRACH occasions does not precede a synchronization signal block, SSB, in a PRACH slot, starts at least a predetermined number of symbols after a last downlink symbol of an intersection of at least one downlink symbol configured by the first configuration information and at least one downlink symbol configured by the

second configuration information, and starts at least the predetermined number of symbols after a last SSB symbol.

## Patentansprüche

1. Verfahren, das von einem Endgerät (1400) in einem Kommunikationssystem durchgeführt wird, wobei das Verfahren umfasst:

   Empfangen, von einer Basisstation (1500), erster Konfigurationsinformationen eines Zeitduplexverfahrens, TDD, und zweiter Konfigurationsinformationen, die sich auf einen Teil einer Frequenzressource beziehen, der einer Downlink-Zeitressource entspricht, die durch die ersten Konfigurationsinformationen konfiguriert ist, die für eine Uplink-Ressource verwendet wird;
   Identifizieren mindestens einer gültigen Gelegenheit eines physikalischen Zufallszugriffskanals, PRACH, aus einer Vielzahl von PRACH-Gelegenheiten basierend darauf, ob jede der Vielzahl von PRACH-Gelegenheiten mit mindestens einem Uplink-Symbol konfiguriert ist, wobei das mindestens eine Uplink-Symbol in einer Vereinigung aus mindestens einem Uplink-Symbol, das durch die ersten Konfigurationsinformationen konfiguriert ist, und mindestens einem Uplink-Symbol, das durch die zweiten Konfigurationsinformationen konfiguriert ist, beinhaltet ist;
   Empfangen, von der Basisstation (1500), dritter Konfigurationsinformationen bezüglich der Priorität zwischen der mindestens einen gültigen PRACH-Gelegenheit und einem Downlink-Empfang;
   Identifizieren, dass die mindestens eine gültige PRACH-Gelegenheit und eine Downlink-Zeitressource, die dem Downlink-Empfang entspricht, miteinander kollidieren;
   Bestimmen, ob eine Zufallszugriffspräambel an die Basisstation (1500) zu übertragen ist oder der Downlink-Empfang von der Basisstation (1500) zu empfangen ist, basierend auf den dritten Konfigurationsinformationen; und
   Übertragen, an die Basisstation (1500), der Zufallszugriffspräambel bei der mindestens einen gültigen PRACH-Gelegenheit basierend auf dem Bestimmen, die Zufallszugriffspräambel zu übertragen.

2. Verfahren nach Anspruch 1, wobei das mindestens eine Uplink-Symbol, das durch die zweiten Konfigurationsinformationen konfiguriert ist, dem Teil der Frequenzressource entspricht.

3. Verfahren nach Anspruch 1, ferner umfassend Identifizieren der mindestens einen gültigen PRACH-Gelegenheit basierend darauf, ob jede der Vielzahl von PRACH-Gelegenheiten nicht einem Synchronisationssignalblock, SSB, in einem PRACH-Schlitz vorausgeht, mindestens eine vorbestimmte Anzahl von Symbolen nach einem letzten Downlink-Symbol einer Schnittmenge aus mindestens einem Downlink-Symbol, das durch die ersten Konfigurationsinformationen konfiguriert ist, und mindestens einem Downlink-Symbol, das durch die zweiten Konfigurationsinformationen konfiguriert ist, beginnt und mindestens die vorbestimmte Anzahl von Symbolen nach einem letzten SSB-Symbol beginnt.

4. Verfahren, das durch eine Basisstation (1500) in einem Kommunikationssystem durchgeführt wird, wobei das Verfahren umfasst:

   Übertragen, an ein Endgerät (1400), erster Konfigurationsinformationen eines Zeitduplexverfahrens, TDD, und zweiter Konfigurationsinformationen, die sich auf einen Teil einer Frequenzressource beziehen, der einer Downlink-Zeitressource entspricht, die durch die ersten Konfigurationsinformationen konfiguriert ist, die für eine Uplink-Ressource verwendet wird;
   Identifizieren einer Priorität für das Endgerät (1400) zwischen einer PRACH-Übertragung bei mindestens einer gültigen PRACH-Gelegenheit und einem Downlink-Empfang, wobei die mindestens eine gültige PRACH-Gelegenheit und eine Downlink-Zeitressource, die dem Downlink-Empfang entspricht, miteinander kollidieren;
   Übertragen, an das Endgerät (1400), dritter Konfigurationsinformationen bezüglich der Priorität; und
   Empfangen, von dem Endgerät (1400), einer Zufallszugriffspräambel bei der mindestens einen gültigen PRACH-Gelegenheit, basierend darauf, dass die Priorität der PRACH-Übertragung höher ist als die Priorität des Downlink-Empfangs,
   wobei die mindestens eine gültige PRACH-Gelegenheit aus einer Vielzahl von PRACH-Gelegenheiten basierend darauf identifiziert ist, ob jede der Vielzahl von PRACH-Gelegenheiten mit mindestens einem Uplink-Symbol konfiguriert ist, wobei das mindestens eine Uplink-Symbol in einer Vereinigung aus mindestens einem Uplink-Symbol, das durch die ersten Konfigurationsinformationen konfiguriert ist, und mindestens einem Uplink-Symbol, das durch die zweiten Konfigurationsinformationen konfiguriert ist, beinhaltet ist.

5. Verfahren nach Anspruch 4, wobei das mindestens eine Uplink-Symbol, das durch die zweiten Konfigurationsinformationen konfiguriert ist, dem Teil der Frequenzressource entspricht.

6. Verfahren nach Anspruch 4, wobei die mindestens eine gültige PRACH-Gelegenheit basierend darauf identifiziert ist, ob jede der Vielzahl von PRACH-Gelegenheiten nicht einem Synchronisationssignalblock, SSB, in einem PRACH-Schlitz vorausgeht, mindestens eine vorbestimmte Anzahl von Symbolen nach einem letzten Downlink-Symbol einer Schnittmenge aus mindestens einem Downlink-Symbol, das durch die ersten Konfigurationsinformationen konfiguriert ist, und mindestens einem Downlink-Symbol, das durch die zweiten Konfigurationsinformationen konfiguriert ist, beginnt und mindestens die vorbestimmte Anzahl von Symbolen nach einem letzten SSB-Symbol beginnt.

7. Endgerät (1400) für ein Kommunikationssystem, wobei das Endgerät (1400) umfasst:

einen Sendeempfänger (1410); und
einen Prozessor (1420), der mit dem Sendeempfänger gekoppelt ist und konfiguriert ist zum:

Empfangen, von einer Basisstation (1500), erster Konfigurationsinformationen eines Zeitduplexverfahrens, TDD, und zweiter Konfigurationsinformationen, die sich auf einen Teil einer Frequenzressource beziehen, der einer Downlink-Zeitressource entspricht, die durch die ersten Konfigurationsinformationen konfiguriert ist, die für eine Uplink-Ressource verwendet wird;
Identifizieren mindestens einer gültigen Gelegenheit eines physikalischen Zufallszugriffskanals, PRACH, aus einer Vielzahl von PRACH-Gelegenheiten basierend darauf, ob jede der Vielzahl von PRACH-Gelegenheiten mit mindestens einem Uplink-Symbol konfiguriert ist, wobei das mindestens eine Uplink-Symbol in einer Vereinigung aus mindestens einem Uplink-Symbol, das durch die ersten Konfigurationsinformationen konfiguriert ist, und mindestens einem Uplink-Symbol, das durch die zweiten Konfigurationsinformationen konfiguriert ist, beinhaltet ist;
Empfangen, von der Basisstation (1500), dritter Konfigurationsinformationen bezüglich der Priorität zwischen der mindestens einen gültigen PRACH-Gelegenheit und einem Downlink-Empfang;
Identifizieren, dass die mindestens eine gültige PRACH-Gelegenheit und eine Downlink-Zeitressource, die dem Downlink-Empfang entspricht, miteinander kollidieren;
Bestimmen, ob eine Zufallszugriffspräambel an die Basisstation (1500) zu übertragen ist oder der Downlink-Empfang von der Basisstation (1500) zu empfangen ist, basierend auf den dritten Konfigurationsinformation; und
Übertragen, an die Basisstation (1500), der Zufallszugriffspräambel bei der mindestens einen gültigen PRACH-Gelegenheit basierend auf dem Bestimmen, die Zufallszugriffspräambel zu übertragen.

8. Endgerät nach Anspruch 7, wobei das mindestens eine Uplink-Symbol, das durch die zweiten Konfigurationsinformationen konfiguriert ist, dem Teil der Frequenzressource entspricht.

9. Endgerät (1400) nach Anspruch 7, wobei der Prozessor (1420) ferner dazu konfiguriert ist, die mindestens eine gültige PRACH-Gelegenheit basierend darauf zu identifizieren, ob jede der Vielzahl von PRACH-Gelegenheiten nicht einem Synchronisationssignalblock, SSB, in einem PRACH-Schlitz vorausgeht, mindestens eine vorbestimmte Anzahl von Symbolen nach einem letzten Downlink-Symbol einer Schnittmenge aus mindestens einem Downlink-Symbol, das durch die ersten Konfigurationsinformationen konfiguriert ist, und mindestens einem Downlink-Symbol, das durch die zweiten Konfigurationsinformationen konfiguriert ist, beginnt und mindestens die vorbestimmte Anzahl von Symbolen nach einem letzten SSB-Symbol beginnt.

10. Basisstation (1500) für ein Kommunikationssystem, wobei die Basisstation (1500) umfasst:

einen Sendeempfänger (1510); und
einen Prozessor (1520), der mit dem Sendeempfänger (1510) gekoppelt ist und konfiguriert ist zum:

Übertragen, an ein Endgerät (1400), erster Konfigurationsinformationen eines Zeitduplexverfahrens, TDD, und zweiter Konfigurationsinformationen, die sich auf einen Teil einer Frequenzressource beziehen, der einer Downlink-Zeitressource entspricht, die durch die ersten Konfigurationsinformationen konfiguriert ist, die für eine Uplink-Ressource verwendet wird;
Identifizieren einer Priorität für das Endgerät (1400) zwischen einer PRACH-Übertragung bei mindestens einer gültigen PRACH-Gelegenheit und einem Downlink-Empfang, wobei die mindestens eine gültige PRACH-Gelegenheit und eine Downlink-Zeitressource, die dem Downlink-Empfang entspricht, miteinander

kollidieren;
Übertragen, an das Endgerät (1400), dritter Konfigurationsinformationen bezüglich der Priorität; und
Empfangen, von dem Endgerät (1400), einer Zufallszugriffspräambel bei der mindestens einen gültigen PRACH-Gelegenheit, basierend darauf, dass die Priorität der PRACH-Übertragung höher ist als die Priorität des Downlink-Empfangs,
wobei die mindestens eine gültige PRACH-Gelegenheit aus einer Vielzahl von PRACH-Gelegenheiten basierend darauf identifiziert ist, ob jede der Vielzahl von PRACH-Gelegenheiten mit mindestens einem Uplink-Symbol konfiguriert ist, wobei das mindestens eine Uplink-Symbol in einer Vereinigung aus mindestens einem Uplink-Symbol, das durch die ersten Konfigurationsinformationen konfiguriert ist, und mindestens einem Uplink-Symbol, das durch die zweiten Konfigurationsinformationen konfiguriert ist, beinhaltet ist.

**11.** Basisstation (1500) nach Anspruch 10, wobei das mindestens eine Uplink-Symbol, das durch die zweiten Konfigurationsinformationen konfiguriert ist, dem Teil der Frequenzressource entspricht.

**12.** Basisstation (1500) nach Anspruch 10, wobei die mindestens eine gültige PRACH-Gelegenheit basierend darauf identifiziert ist, ob jede der Vielzahl von PRACH-Gelegenheiten nicht einem Synchronisationssignalblock, SSB, in einem PRACH-Schlitz vorausgeht, mindestens eine vorbestimmte Anzahl von Symbolen nach einem letzten Downlink-Symbol einer Schnittmenge aus mindestens einem Downlink-Symbol, das durch die ersten Konfigurationsinformationen konfiguriert ist, und mindestens einem Downlink-Symbol, das durch die zweiten Konfigurationsinformationen konfiguriert ist, beginnt und mindestens die vorbestimmte Anzahl von Symbolen nach einem letzten SSB-Symbol beginnt.

## Revendications

**1.** Procédé exécuté par un terminal (1400) dans un système de communication, le procédé comprenant :

recevoir, depuis une station de base (1500), des premières informations de configuration de duplexage par répartition dans le temps, TDD, et des deuxièmes informations de configuration relatives à une partie d'une ressource de fréquence correspondant à une ressource temporelle de liaison descendante configurée par les premières informations de configuration, qui est utilisée pour une ressource de liaison montante ;
identifier au moins un canal d'accès aléatoire physique valide, PRACH, parmi une pluralité d'occasions PRACH, en se basant sur le fait de savoir si chacune de la pluralité d'occasions PRACH est configurée avec au moins un symbole de liaison montante, dans lequel l'au moins un symbole de liaison montante est inclus dans une union d'au moins un symbole de liaison montante configuré par les premières informations de configuration et d'au moins un symbole de liaison montante configuré par les deuxièmes informations de configuration ;
recevoir, depuis la station de base (1500), des troisièmes informations de configuration sur la priorité entre l'au moins une occasion PRACH valide et la réception de liaison descendante ;
identifier que l'au moins une occasion PRACH valide et une ressource temporelle de liaison descendante correspondant à la réception de liaison descendante entrent en collision l'une avec l'autre ;
déterminer s'il convient d'émettre, vers la station de base (1500), un préambule d'accès aléatoire ou de recevoir, depuis la station de base (1500), le signal de réception de liaison descendante, en se basant sur les troisièmes informations de configuration ; et
transmettre, à la station de base (1500), le préambule d'accès aléatoire sur l'au moins une occasion PRACH valide, en se basant sur la détermination de transmettre le préambule d'accès aléatoire.

**2.** Procédé selon la revendication 1, dans lequel l'au moins un symbole de liaison montante configuré par les deuxièmes informations de configuration correspond à la partie de la ressource de fréquence.

**3.** Procédé selon la revendication 1, comprenant en outre l'identification de l'au moins une occasion PRACH valide en se basant sur le fait de savoir si chacune de la pluralité d'occasions PRACH ne précède pas un bloc de signaux de synchronisation, SSB, dans un créneau PRACH, commence au moins un nombre prédéterminé de symboles après un dernier symbole de liaison descendante d'une intersection d'au moins un symbole de liaison descendante configuré par les premières informations de configuration et au moins un symbole de liaison descendante configuré par les deuxièmes informations de configuration, et commence au moins le nombre prédéterminé de symboles après un dernier symbole SSB.

**4.** Procédé exécuté par une station de base (1500) dans un système de communicateur, le procédé comprenant :

transmettre, vers un terminal (1400), des premières informations de configuration de duplexage par répartition dans le temps, TDD, et des deuxièmes informations de configuration relatives à une partie d'une ressource de fréquence correspondant à une ressource temporelle de liaison descendante configurée par les premières informations de configuration, qui est utilisée pour une ressource de liaison montante ;
déterminer la priorité pour le terminal (1400) entre une transmission PRACH sur au moins une occasion PRACH valide et une réception de liaison descendante, dans lequel l'au moins une occasion PRACH valide et une ressource temporelle de liaison descendante correspondant à la réception de liaison descendante entrent en collision l'une avec l'autre ;
transmettre au terminal (1400) des troisièmes informations de configuration sur la priorité ; et
recevoir, depuis le terminal (1400), un préambule d'accès aléatoire sur l'au moins une occasion PRACH valide, en se basant sur le fait que la priorité de la transmission PRACH est supérieure à la priorité de la réception de liaison descendante,
dans lequel l'au moins une occasion PRACH valide est identifiée parmi une pluralité d'occasions PRACH, en se basant sur le fait de savoir si chacune de la pluralité d'occasions PRACH est configurée avec au moins un symbole de liaison montante, dans lequel l'au moins un symbole de liaison montante est inclus dans une union d'au moins un symbole de liaison montante configuré par les premières informations de configuration et d'au moins un symbole de liaison montante configuré par les deuxièmes informations de configuration.

5. Procédé selon la revendication 4, dans lequel l'au moins un symbole de liaison montante configuré par les deuxièmes informations de configuration correspond à la partie de la ressource de fréquence.

6. Procédé selon la revendication 4, dans lequel l'au moins une occasion PRACH valide est identifiée en se basant sur le fait de savoir si chacune de la pluralité d'occasions PRACH ne précède pas un bloc de signaux de synchronisation, SSB, dans un créneau PRACH, commence au moins un nombre prédéterminé de symboles après un dernier symbole de liaison descendante d'une intersection d'au moins un symbole de liaison descendante configuré par les premières informations de configuration et au moins un symbole de liaison descendante configuré par les deuxièmes informations de configuration, et commence au moins le nombre prédéterminé de symboles après un dernier symbole SSB.

7. Terminal (1400) destiné à un système de communication, le terminal (1400) comprenant :

un émetteur-récepteur (1410) ; et
un processeur (1420) couplé à l'émetteur-récepteur, et configurée pour :

recevoir, depuis une station de base (1500), des premières informations de configuration de duplexage par répartition dans le temps, TDD, et des deuxièmes informations de configuration relatives à une partie d'une ressource de fréquence correspondant à une ressource temporelle de liaison descendante configurée par les premières informations de configuration, qui est utilisée pour une ressource de liaison montante ;
identifier au moins un canal d'accès aléatoire physique valide, PRACH, parmi une pluralité d'occasions PRACH, en se basant sur le fait de savoir si chacune de la pluralité d'occasions PRACH est configurée avec au moins un symbole de liaison montante, dans lequel l'au moins un symbole de liaison montante est inclus dans une union d'au moins un symbole de liaison montante configuré par les premières informations de configuration et d'au moins un symbole de liaison montante configuré par les deuxièmes informations de configuration ;
recevoir, depuis la station de base (1500), des troisièmes informations de configuration sur la priorité entre l'au moins une occasion PRACH valide et la réception de liaison descendante ;
identifier que l'au moins une occasion PRACH valide et une ressource temporelle de liaison descendante correspondant à la réception de liaison descendante entrent en collision l'une avec l'autre ;
déterminer s'il convient d'émettre, vers la station de base (1500), un préambule d'accès aléatoire ou de recevoir, depuis la station de base (1500), le signal de réception de liaison descendante, en se basant sur les troisièmes informations de configuration ; et
transmettre, à la station de base (1500), le préambule d'accès aléatoire sur l'au moins une occasion PRACH valide, en se basant sur la détermination de transmettre le préambule d'accès aléatoire.

8. Terminal selon la revendication 7, dans lequel l'au moins un symbole de liaison montante configuré par les deuxièmes informations de configuration correspond à la partie de la ressource de fréquence.

9. Terminal (1400) selon la revendication 7, dans lequel le processeur (1420) est en outre configuré pour identifier l'au

moins une occasion PRACH valide en se basant sur le fait de savoir si chacune de la pluralité d'occasions PRACH ne précède pas un bloc de signaux de synchronisation, SSB, dans un créneau PRACH, commence au moins un nombre prédéterminé de symboles après un dernier symbole de liaison descendante d'une intersection d'au moins un symbole de liaison descendante configuré par les premières informations de configuration et au moins un symbole de liaison descendante configuré par les deuxièmes informations de configuration, et commence au moins le nombre prédéterminé de symboles après un dernier symbole SSB.

**10.** Station de base (1500) pour un système de communication, la station de base (1500) comprenant :

un émetteur-récepteur (1510) ; et
un processeur (1520), couplé à l'émetteur-récepteur (1510) et configuré pour :

transmettre, vers un terminal (1400), des premières informations de configuration de duplexage par répartition dans le temps, TDD, et des deuxièmes informations de configuration relatives à une partie d'une ressource de fréquence correspondant à une ressource temporelle de liaison descendante configurée par les premières informations de configuration, qui est utilisée pour une ressource de liaison montante ;
déterminer la priorité pour le terminal (1400) entre une transmission PRACH sur au moins une occasion PRACH valide et une réception de liaison descendante, dans laquelle l'au moins une occasion PRACH valide et une ressource temporelle de liaison descendante correspondant à la réception de liaison descendante entrent en collision l'une avec l'autre ;
transmettre au terminal (1400) des troisièmes informations de configuration sur la priorité ; et
recevoir, depuis le terminal (1400), un préambule d'accès aléatoire sur l'au moins une occasion PRACH valide, en se basant sur le fait que la priorité de la transmission PRACH est supérieure à la priorité de la réception de liaison descendante,
dans laquelle l'au moins une occasion PRACH valide est identifiée parmi une pluralité d'occasions PRACH, en se basant sur le fait de savoir si chacune de la pluralité d'occasions PRACH est configurée avec au moins un symbole de liaison montante, dans laquelle l'au moins un symbole de liaison montante est inclus dans une union d'au moins un symbole de liaison montante configuré par les premières informations de configuration et d'au moins un symbole de liaison montante configuré par les deuxièmes informations de configuration.

**11.** Station de base (1500) selon la revendication 10, dans laquelle l'au moins un symbole de liaison montante configuré par les deuxièmes informations de configuration correspond à la partie de la ressource de fréquence.

**12.** Station de base (1500) selon la revendication 10, dans laquelle l'au moins une occasion PRACH valide est identifiée en se basant sur le fait de savoir si chacune de la pluralité d'occasions PRACH ne précède pas un bloc de signaux de synchronisation, SSB, dans un créneau PRACH, commence au moins un nombre prédéterminé de symboles après un dernier symbole de liaison descendante d'une intersection d'au moins un symbole de liaison descendante configuré par les premières informations de configuration et au moins un symbole de liaison descendante configuré par les deuxièmes informations de configuration, et commence au moins le nombre prédéterminé de symboles après un dernier symbole SSB.

FIG. 1

One subframe (110)
$N_{symb}^{subframe,\mu}$ OFDM symbols
1 OFDM symbols (102)
1 subcarrier (103)
$k=N_{RB,x}^{max,\mu}N_{sc}^{RB}-1$
$N_{RB}^{\mu}N_{sc}^{RB}$ subcarriers
Resource block $N_{sc}^{RB}$ subcarriers (104)
Resource element (k,l) (101)
Frequency
k=0
$\bar{l}=0$
$\bar{l}=14\cdot 2^{\mu}-1$
Time

1 frame (200)
1 subframe (201)
slot (202)
slot (203)
μ=0 (204)
μ=1 (205)
0
1
2
3
4
5
6
7
8
9
10
11
12
13
14
15
16
17
18
19

FIG. 2

FIG. 3

1 OFDM symbol
(304)
310
6RB
(307)
12RB
(305)
6RB
(308)
PSS
(301)
PBCH
(302)
PBCH
(302)
SSS
(303)
PBCH
(302)
PBCH
(302)
24RB
(306)
SS block
(300)

FIG. 4

15kHz (420)
1ms (404)
1 2 3 4 5 6 7 8 9 10 11 12 13 14
Case #1 (401)
12 RBs
PSS PBCH SSS PBCH
PSS PBCH SSS PBCH
24 RBs
1 symbol
SS block #0 (407)
SS block #1 (408)
30kHz (430)
0.5ms (405)
0.5ms
Case #2 (402)
PSS PBCH SSS PBCH PSS PBCH SSS PBCH PSS PBCH SSS PBCH PSS PBCH SSS PBCH
SS block #0 (409)
SS block #1 (410)
SS block #2 (411)
SS block #3 (412)
30kHz (440)
0.5ms (406)
0.5ms
Case #3 (403)
PSS PBCH SSS PBCH PSS PBCH SSS PBCH PSS PBCH SSS PBCH PSS PBCH SSS PBCH
SS block #0 (413)
SS block #1 (414)
SS block #2 (415)
SS block #3 (416)

FIG. 5
0.25ms (501)
120kHz (530)
Case #4 (510)
12 RBs
PSS PBCH SSS PBCH PSS PBCH SSS PBCH
PSS PBCH SSS PBCH PSS PBCH SSS PBCH
1 symbol
SS block #0 (503)
SS block #1 (504)
SS block #2 (505)
SS block #3 (506)
0.25ms (502)
240kHz (540)
Case #5 (520)
12 RBs
PSS SSS PBCH PBCH
SS block #0 (507)
#1 (508)
#2 (505)
#3 (510)
#4 (511)
#5 (512)
#6 (513)
#7 (514)

FIG. 6

Half frame 5ms (610)
1ms (611)
Case #1 (620)
L=4 (621)
L=8 (622)
Case #2 (630)
L=4 (631)
L=8 (632)
Case #3 (640)
L=4 (641)
L=8 (642)
Case #4 (650)
L=64 (651)
Case #5 (660)
L=64 (661)

FIG. 7

UE
gNB
Random Access Preamble
Message 1
①
701
Random Access Preamble
Message 2
702
②
Scheduled Transmission
Message 3
③
703
Contention Resolution
Message 4
704
④

FIG. 8

TDD (800)
D D D F U D D D F U

TDD (820)
0 1 2 3 4
D D D F U D D D F U
XDD (821)

XDD configuration (822)
U U U U U U U U U U

FIG. 9

SSB/PBCH block (901)
SSB/PBCH block (911)
0
1
2
3
4
5
6
7
8
9
TDD (900)
D
D
D
F
U
U
XDD (821)
XDD configuration (902)
0
1
2
3
D
S
U
U
U
D
S
U
U
U
D F U
...
U U U U
...
$N_{gap}$ (910)
Valid PRACH occasion (912)
Valid PRACH occasion (922)

FIG. 10

TDD (1000)

D | D | D | D | F | U | D | D | D | F | U

XDD(1001)

1021

Switching time (TX RX)

Switching time (TX RX)

Valid PRACH occasion (1022)

XDD configuration (1002)

D | S | U | U | U | U | D | S | U | U | U | U

0 1 2 3

FIG. 11

SSB to PRACH transmission mapping

SS/PBCH blocks

PRACH transmission

8 SSBs, prach_SDM = 4, SSB_per_RO = ¼ Each SSB mapped to one time domain RO N < 1 (1101)

8 SSBs, prach_FDM = 4, SSB_per_RO = 1 4 SSB mapped to one time domain RO N = 1 (1102)

8 SSBs, prach_FDM = 4, SSB_per_RO = 2 All SSB mapped to one time domain RO N > 1 (1103)

f

t

FIG. 12

START
According to embodiment of disclosure, transmit XDD terminal-related information and receive necessary information
1201
According to embodiment of disclosure, when downlink signal and uplink signal overlap with each other in time interval, receive downlink signal or transmit uplink signal
1202
END

FIG. 13

START
According to embodiment of disclosure, receive XDD terminal-related information and transmit necessary information
1301
According to embodiment of disclosure, transmit downlink signal and receive uplink signal
1302
END

FIG. 14

1400
1410
Transceiver
Processor
1420
1430
Memory

FIG. 15

1500
1510
Transceiver
Processor
1520
1530
Memory

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021066441 A